# EUROPEAN PATENT APPLICATION

(11) **EP 4 848 432 A1**
(43) Date of publication of application: **02.12.2026**
(21) Application number: 24921468.5
(22) Date of filing: 26.09.2024
(51) Int. Cl.: H01M 50/244

(54) **BATTERY, GROUPING METHOD, AND ELECTRIC DEVICE**

(30) Priority: 30.01.2024 CN 202410133204
(71) Applicant: Contemporary Amperex Intelligence Technology (Shanghai) Limited, Shanghai 201306 (CN)
(72) Inventor: JIANG, Shengli, Shanghai 201306 (CN); ZHANG, Xiaoping, Shanghai 201306 (CN); CHEN, Shiqiang, Shanghai 201306 (CN); HUANG, Meiling, Shanghai 201306 (CN)
(74) Representative: Gong, Jinping
(86) International application number: PCT/CN2024/121527
(87) International publication number: WO 2025/161444

(57) **Abstract**

A battery (100), an assembly method, and an electric apparatus are provided. The battery (100) includes: a frame (102), where an accommodating cavity (101) is provided in the frame (102), and a side of the frame (102) along a first direction is provided with an opening (103) in communication with the accommodating cavity (101); a plurality of cylindrical battery cells (20), where the plurality of cylindrical battery cells (20) are accommodated in the accommodating cavity (101); and at least one insulating and limiting strip (13), where the insulating and limiting strip (13) is accommodated in the accommodating cavity (101), and two adjacent cylindrical battery cells (20) are separated and limited by at least one insulating and limiting strip (13). The battery (100) can make the installation of a cylindrical battery module simple and take less time.

## Description

### CROSS-REFERENCE TO RELATED APPLICATIONS

This application claims priority to and rights of the Patent Application No. 202410133204.6, filed with the China National Intellectual Property Administration on January 30, 2024, which is incorporated herein by reference in its entirety.

### TECHNICAL FIELD

This application relates to the field of batteries, and specifically, to a battery, an assembly method, and an electric apparatus.

### BACKGROUND

In the related art, in most cases, a battery cell assembly method is to insert the battery cell into a frame. The insertion process imposes high requirements on positioning processes, positioning accuracy, and devices. In addition, a large amount of adhesive is needed to improve strength and rigidity. However, the adhesive is high in cost and long in curing time, such that the battery cell is difficult to replace after adhesive application.

### SUMMARY

In view of the above problems, this application provides a battery, an assembly method, and an electric apparatus, which can solve the problems of high position accuracy requirements and long assembly time in a battery cell assembly process.

According to a first aspect, this application provides a battery. The battery includes:
a frame, where an accommodating cavity is provided in the frame, and a side of the frame along a first direction is provided with an opening in communication with the accommodating cavity;
a plurality of cylindrical battery cells, where the plurality of cylindrical battery cells are accommodated in the accommodating cavity; and
at least one insulating and limiting strip, where the insulating and limiting strip is accommodated in the accommodating cavity, and two adjacent cylindrical battery cells are separated and limited by at least one of the insulating and limiting strips.

In the technical solutions of embodiments of this application, when the cylindrical battery cells are assembled, the opening can be arranged upward along a vertical direction, and the plurality of cylindrical battery cells and the insulating and limiting strips can be loaded into the accommodating cavity through the opening from top to bottom. During assembly of the cylindrical battery cells, low position accuracy requirements are imposed during placement of the cylindrical battery cells and the insulating and limiting strips. After placement, the cylindrical battery cells and the insulating and limiting strips are automatically corrected to the most stable positions under the action of gravity, exhibiting self-adaptability, and allowing the arrangement to have self-stability. The positions of the cylindrical battery cells and the insulating and limiting strips are reliable. Moreover, as the number of cylindrical battery cells and insulating and limiting strips increases, the cooperation between the cylindrical battery cells and the insulating and limiting strips automatically becomes tighter, the installation is simple and takes less time, and the cylindrical battery cells can be cooperatively limited by the insulating and limiting strips and the frame.

In some embodiments, a length direction of the cylindrical battery cell is along a second direction, a length direction of the insulating and limiting strip is along the second direction, and the second direction and the first direction are perpendicular to each other.

The length direction of the insulating and limiting strip is parallel to the length direction of the cylindrical battery cell, allowing for a large contact area between the insulating and limiting strip and the cylindrical battery cell in the length direction, and helping to improve the limiting effect of the insulating and limiting strip on the cylindrical battery cell.

In some embodiments, the battery includes a plurality of rows of cylindrical battery cells arranged at intervals along the first direction; a length direction of the cylindrical battery cell is along a second direction; two adjacent rows of cylindrical battery cells along the first direction are separated and limited by at least one of the insulating and limiting strips, and/or two adjacent cylindrical battery cells in a same row of cylindrical battery cells are separated and limited by at least one of the insulating and limiting strips; and the second direction and the first direction are perpendicular to each other.

On one hand, the insulating and limiting strip can separate the cylindrical battery cells to achieve electrical isolation between two adjacent cylindrical battery cells, avoiding phenomena such as short circuits caused by contact between cylindrical surfaces of two adjacent cylindrical battery cells in the same row or different rows. On the other hand, the insulating and limiting strip can also limit the cylindrical battery cells to prevent displacement of the cylindrical battery cells. The battery includes the plurality of rows of cylindrical battery cells arranged at intervals along the first direction, so that the arrangement of the cylindrical battery cells is relatively regular, and a large number of cylindrical battery cells can be placed, thereby helping to increase the energy density of the battery.

In some embodiments, the at least one insulating and limiting strip includes a plurality of insulating and limiting strips; the plurality of insulating and limiting strips are arranged in a row along a third direction; the two adjacent rows of cylindrical battery cells along the first direction are limited by one row of insulating and limiting strips; and the third direction, the first direction, and the second direction are perpendicular to each other.

The two adjacent rows of cylindrical battery cells along the first direction are limited by one row of insulating and limiting strips, making the cooperation between the two adjacent rows of cylindrical battery cells tight and the displacement less likely to occur.

In some embodiments, a bottom surface of the accommodating cavity is provided with a plurality of first cylindrical surface accommodating grooves; the plurality of first cylindrical surface accommodating grooves are arranged at intervals along the third direction; a length direction of the first cylindrical surface accommodating groove is along the second direction; a plurality of cylindrical battery cells in a row of cylindrical battery cells closest to the bottom surface of the accommodating cavity are partially accommodated in the plurality of first cylindrical surface accommodating grooves in one-to-one correspondence; and the third direction, the first direction, and the second direction are perpendicular to each other.

The first cylindrical surface accommodating groove is used to adapt to the first row of cylindrical battery cells and can limit the first row of cylindrical battery cells on the bottom surface of the accommodating cavity, avoiding or reducing displacement of the cylindrical battery cells.

In some embodiments, the at least one insulating and limiting strip includes a first insulating and limiting strip, and the first insulating and limiting strip is provided with a second cylindrical surface accommodating groove, a third cylindrical surface accommodating groove, and a fourth cylindrical surface accommodating groove; and
in the two adjacent rows of cylindrical battery cells along the first direction, two adjacent cylindrical battery cells in one row of cylindrical battery cells are respectively partially accommodated along a third direction in the second cylindrical surface accommodating groove and the third cylindrical surface accommodating groove, and one cylindrical battery cell in the other row of cylindrical battery cells is partially accommodated in the fourth cylindrical surface accommodating groove; and the third direction, the first direction, and the second direction are perpendicular to each other.

The second cylindrical surface accommodating groove, the third cylindrical surface accommodating groove, and the fourth cylindrical surface accommodating groove of one first insulating and limiting strip can limit three cylindrical battery cells in contact with the first insulating and limiting strip, avoiding or reducing displacement of the cylindrical battery cells. The first insulating and limiting strip is simple to manufacture, the battery is lightweight, and after assembly, individual cylindrical battery cells are conveniently replaced. In addition, the first insulating and limiting strip that limits fewer cylindrical battery cells can reduce maintenance costs during replacement.

In some embodiments, the at least one insulating and limiting strip includes a second insulating and limiting strip, and the second insulating and limiting strip is provided with a fifth cylindrical surface accommodating groove, a sixth cylindrical surface accommodating groove, a seventh cylindrical surface accommodating groove, and an eighth cylindrical surface accommodating groove; and
in the two adjacent rows of cylindrical battery cells along the first direction, two adjacent cylindrical battery cells in one row of cylindrical battery cells are respectively partially accommodated along a third direction in the fifth cylindrical surface accommodating groove and the sixth cylindrical surface accommodating groove, and two adjacent cylindrical battery cells in the other row of cylindrical battery cells are respectively partially accommodated along the third direction in the seventh cylindrical surface accommodating groove and the eighth cylindrical surface accommodating groove; and the third direction, the first direction, and the second direction are perpendicular to each other.

The fifth cylindrical surface accommodating groove, the sixth cylindrical surface accommodating groove, the seventh cylindrical surface accommodating groove, and the eighth cylindrical surface accommodating groove of one second insulating and limiting strip can limit four cylindrical battery cells in contact with the second insulating and limiting strip, avoiding or reducing displacement of the cylindrical battery cells. Optionally, in an embodiment, compared to the first insulating and limiting strip, in the second insulating and limiting strip, cylindrical surfaces (contact surfaces) of the fifth cylindrical surface accommodating groove, the sixth cylindrical surface accommodating groove, the seventh cylindrical surface accommodating groove, and the eighth cylindrical surface accommodating groove have larger sector angles, achieving the maximum space utilization, and allowing the battery to have a more stable structure and higher strength. In addition, one second insulating and limiting strip can limit more cylindrical battery cells, so that when a same number of cylindrical battery cells are limited, the number of insulating and limiting strips used and the installation time can be reduced, thereby improving the installation efficiency and reducing costs. To further improve the installation efficiency, the second insulating and limiting strip can be designed as a shape structure spanning more cylindrical battery cells.

In some embodiments, the second insulating and limiting strip is provided with a ninth cylindrical surface accommodating groove and a tenth cylindrical surface accommodating groove; and
in the two adjacent rows of cylindrical battery cells along the first direction, three adjacent cylindrical battery cells in one row of cylindrical battery cells are partially accommodated along the third direction in the fifth cylindrical surface accommodating groove, the sixth cylindrical surface accommodating groove, and the tenth cylindrical surface accommodating groove in one-to-one correspondence, and three adjacent cylindrical battery cells in the other row of cylindrical battery cells are partially accommodated along the third direction in the ninth cylindrical surface accommodating groove, the seventh cylindrical surface accommodating groove, and the eighth cylindrical surface accommodating groove in one-to-one correspondence.

The fifth cylindrical surface accommodating groove, the sixth cylindrical surface accommodating groove, the seventh cylindrical surface accommodating groove, the eighth cylindrical surface accommodating groove, the ninth cylindrical surface accommodating groove, and the tenth cylindrical surface accommodating groove can limit six cylindrical battery cells in contact with the second insulating and limiting strip, avoiding or reducing displacement of the cylindrical battery cells. In addition, one second insulating and limiting strip can limit more cylindrical battery cells, so that when a same number of cylindrical battery cells are limited, the number of insulating and limiting strips used and the installation time can be reduced, thereby improving the installation efficiency and reducing costs.

In some embodiments, the fifth cylindrical surface accommodating groove, the sixth cylindrical surface accommodating groove, and the tenth cylindrical surface accommodating groove are sequentially arranged along the third direction, and sector angles of the sixth cylindrical surface accommodating groove, the fifth cylindrical surface accommodating groove, and the tenth cylindrical surface accommodating groove sequentially decrease; and
the ninth cylindrical surface accommodating groove, the seventh cylindrical surface accommodating groove, and the eighth cylindrical surface accommodating groove are sequentially arranged along the third direction, and sector angles of the seventh cylindrical surface accommodating groove, the eighth cylindrical surface accommodating groove, and the ninth cylindrical surface accommodating groove sequentially decrease.

In two adjacent second insulating and limiting strips in a same row of second insulating and limiting strips, the tenth cylindrical surface accommodating groove of one second insulating and limiting strip and the fifth cylindrical surface limiting groove of the other second insulating and limiting strip can jointly limit a same cylindrical battery cell located below. In two adjacent second insulating and limiting strips in a same row of second insulating and limiting strips, the ninth cylindrical surface accommodating groove of one second insulating and limiting strip and the eighth cylindrical surface limiting groove of the other second insulating and limiting strip can jointly limit a same cylindrical battery cell located above, achieving a good limiting effect.

In some embodiments, the battery includes a baffle, where the baffle is fixedly connected to a side surface of the frame provided with the opening and covers the opening, and the baffle limits a cylindrical battery cell in contact with the baffle.

Through the baffle, a cylindrical battery cell closest to the opening can be limited and fixed, thereby allowing all cylindrical battery cells in the accommodating cavity to be more effectively limited.

In some embodiments, a side surface of the baffle facing the accommodating cavity is provided with a plurality of eleventh cylindrical surface accommodating grooves; the plurality of eleventh cylindrical surface accommodating grooves are arranged at intervals along a third direction; a plurality of cylindrical battery cells in one row of cylindrical battery cells in contact with the baffle are partially accommodated in the plurality of eleventh cylindrical surface accommodating grooves in one-to-one correspondence; and the third direction and the first direction are perpendicular to each other.

The eleventh cylindrical surface accommodating groove can limit the cylindrical battery cell in contact with the baffle, avoiding or reducing displacement of the cylindrical battery cell.

In some embodiments, a sector angle of the cylindrical surface accommodating groove is less than or equal to 180 degrees.

The sector angle of the cylindrical surface accommodating groove is less than or equal to 180 degrees, and a groove opening angle of the cylindrical surface accommodating groove is large, thereby allowing the cylindrical battery cell to easily enter the cylindrical surface accommodating groove, and improving the installation efficiency.

In some embodiments, the sector angle of the cylindrical surface accommodating groove is greater than 45 degrees.

The sector angle of the cylindrical surface accommodating groove is greater than 45 degrees and less than or equal to 180 degrees, and the groove opening angle of the cylindrical surface accommodating groove is appropriate, thereby improving the installation efficiency and limiting effect of the cylindrical battery cell while ensuring the mechanical strength of the frame and the insulating and limiting strip.

In some embodiments, at least one side wall of the accommodating cavity along a third direction is provided with a plurality of first cylindrical surface limiting portions and a plurality of second cylindrical surface limiting portions, where the first cylindrical surface limiting portion and the second cylindrical surface limiting portion are alternately arranged along the first direction, and the third direction, the first direction, and the second direction are perpendicular to each other; and
the first cylindrical surface limiting portion limits an insulating and limiting strip in contact with the first cylindrical surface limiting portion along the third direction, and the second cylindrical surface limiting portion limits a cylindrical battery cell in contact with the second cylindrical surface limiting portion along the third direction.

The first cylindrical surface limiting portion limits the insulating and limiting strip in contact with the first cylindrical surface limiting portion, and the second cylindrical surface limiting portion limits the cylindrical battery cell in contact with the second cylindrical surface limiting portion, so that in cooperation with the gravity actions of the insulating and limiting strip and the cylindrical battery cell and the gravity actions of the insulating and limiting strip and the cylindrical battery cell located above, the cooperation between the cylindrical battery cell and the insulating and limiting strip can automatically become tighter, and the installation is simple.

In some embodiments, a distance between the lowest end of the first cylindrical surface limiting portion and a center of the cylindrical battery cell located below is L, where L > R + d, R is a radius of the cylindrical battery cell, and d is a safety margin; along the first direction, a transition boundary below the first cylindrical surface limiting portion is located outside a first virtual circle; and the first virtual circle is defined as a virtual circle, where the virtual circle is tangent to a tangent line to a vertex of a cylindrical surface of the second cylindrical surface limiting portion located below the first cylindrical surface limiting portion along the first direction, passes through the lowest end of the first cylindrical surface limiting portion, and has a radius equal to the radius of the cylindrical battery cell.

An excessively large sector angle of the first cylindrical surface limiting portion may lead to difficulty in installing the cylindrical battery cell located below. When the sector angle of the first cylindrical surface limiting portion is significantly increased along a second virtual circle, if one cylindrical battery cell is placed first, another cylindrical battery cell cannot be placed conveniently. To make the placement of a same row of cylindrical battery cells not affected by a placement order and maximize the installation convenience, first, the distance L between the lowest end of the first cylindrical surface limiting portion and the center of the cylindrical battery cell located below satisfies L > R + d; and second, along the first direction, the transition boundary below the first cylindrical surface limiting portion is located outside the first virtual circle.

In some embodiments, d > R × 1/3.

Under the condition that the mechanical strength of the first cylindrical surface limiting portion is satisfied, the placement of the same row of cylindrical battery cells may be less affected by the placement order, thereby maximizing the installation convenience.

In some embodiments, the battery includes a hole, and the hole runs through at least one side surface of the insulating and limiting strip along the second direction.

The provision of the hole helps to reduce the weight of the insulating and limiting strip, thereby reducing materials of the insulating and limiting strip and increasing the energy density of the battery. The materials dropped due to the provision of the hole can be reused, so that the cost of the insulating and limiting strip can also be reduced.

In some embodiments, the battery includes a heat conducting member, and the heat conducting member is at least partially located in the hole.

When the cylindrical battery cell generates heat, the heat of the cylindrical battery cell can be transferred to the heat conducting member through the insulating and limiting strip, and the heat is then transferred from the middle of the heat conducting member to two ends of the heat conducting member for dissipation, thereby effectively dissipating heat from the cylindrical battery cell.

In some embodiments, the battery includes a structural reinforcing member, and the structural reinforcing member is at least partially located in the hole, and a rigidity of the structural reinforcing member is greater than a rigidity of the insulating and limiting strip.

The insulating and limiting strip has low rigidity and is easily crushed by the cylindrical battery cell. The rigidity of the structural reinforcing member is high, which can increase the rigidity of the insulating and limiting strip and extend the service life of the insulating and limiting strip.

According to a second aspect, this application provides a battery cell assembly method. The battery cell assembly method includes:
providing a frame, where an accommodating cavity is provided in the frame, and a side of the frame is provided with an opening in communication with the accommodating cavity; and
loading a plurality of cylindrical battery cells into the accommodating cavity through the opening, and loading at least one insulating and limiting strip into the accommodating cavity through the opening, so that the plurality of cylindrical battery cells are arranged at intervals, and two adjacent cylindrical battery cells are separated and limited by at least one insulating and limiting strip.

In the above assembly method, low position accuracy requirements are imposed during placement of the cylindrical battery cells and the insulating and limiting strips. After placement, the cylindrical battery cells and the insulating and limiting strips are automatically corrected to the most stable positions under the action of gravity, exhibiting self-adaptability, and allowing the arrangement to have self-stability. The positions of the cylindrical battery cells and the insulating and limiting strips are reliable. Moreover, as the number of cylindrical battery cells and insulating and limiting strips increases, the cooperation between the cylindrical battery cells and the insulating and limiting strip automatically becomes tighter, making the installation simple and efficient.

In some embodiments, the assembly method includes:
connecting a baffle to an upper side of the frame and covering the opening, so that the baffle limits a cylindrical battery cell in contact with the baffle.

Through the baffle, a cylindrical battery cell closest to the opening can be limited and fixed, thereby allowing all cylindrical battery cells in the accommodating cavity to be more effectively limited.

According to a third aspect, this application provides an electric apparatus, where the electric apparatus includes the battery according to any one of the above embodiments, and the battery is configured to provide electrical energy.

The above description is only an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Those of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a schematic structural diagram of a vehicle according to some embodiments of this application;
FIG. 2 is a schematic structural exploded view of a battery according to some embodiments of this application;
FIG. 3 is a schematic enlarged view of part P of the battery in FIG. 2;
FIG. 4 is a schematic enlarged view of part Q of the battery in FIG. 2;
FIG. 5 is a schematic partial structural diagram of a battery according to some embodiments of this application;
FIG. 6 is a schematic partial structural exploded view of a battery according to some embodiments of this application;
FIG. 7 is another schematic partial structural diagram of a battery according to some embodiments of this application;
FIG. 8 is another schematic partial structural exploded view of a battery according to some embodiments of this application;
FIG. 9 is still another schematic partial structural diagram of a battery according to some embodiments of this application;
FIG. 10 is a schematic partial enlarged view of a battery according to some embodiments of this application;
FIG. 11 is another schematic partial enlarged view of a battery according to some embodiments of this application;
FIGs. 12 to 14 are schematic structural diagrams of a first insulating and limiting strip according to some embodiments of this application; and
FIG. 15 is a schematic structural diagram of a second insulating and limiting strip according to some embodiments of this application.

Reference signs in the specific embodiments are as follows:
vehicle 1000;
battery 100; controller 200; motor 300;
frame body 10; accommodating cavity 101; frame 102; opening 103; first cylindrical surface accommodating groove 104; first cylindrical surface limiting portion 105; second cylindrical surface limiting portion 106; first side wall 107; second side wall 108;
cylindrical battery cell 20;
first cover plate assembly 11; first insulating plate 111; busbar 112; second insulating plate 113; cooling plate 114; first through hole 115; second through hole 116; third through hole 117; fourth through hole 118; fifth through hole 119;
second cover plate assembly 12;
insulating and limiting strip 13; first insulating and limiting strip 131; second cylindrical surface accommodating groove 132; third cylindrical surface accommodating groove 133; fourth cylindrical surface accommodating groove 134; second insulating and limiting strip 135; fifth cylindrical surface accommodating groove 136; sixth cylindrical surface accommodating groove 137; seventh cylindrical surface accommodating groove 138; eighth cylindrical surface accommodating groove 139; ninth cylindrical surface accommodating groove 140; tenth cylindrical surface accommodating groove 141;
baffle 14; eleventh cylindrical surface accommodating groove 142;
hole 15;
heat conducting member 16; and
structural reinforcing member 17.

### DESCRIPTION OF EMBODIMENTS

The embodiments of the technical solutions of this application will be described in detail below with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein have the same meaning as commonly understood by those of ordinary skill in the art to which this application belongs; the terms used herein are only for the purpose of describing specific embodiments and are not intended to limit this application; and the terms "include", "comprise", "have", and any variations thereof in the specification and claims of this application and the above description of the drawings are intended to cover non-exclusive inclusions.

In the description of the embodiments of this application, the technical terms "first", "second", and the like are only used to distinguish different objects and cannot be understood as indicating or implying relative importance or implicitly indicating the number, specific order, or primary-secondary relationship of the indicated technical features. In the description of the embodiments of this application, "a plurality of" means two or more, unless otherwise specifically defined.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. Those skilled in the art explicitly and implicitly understand that some embodiments described herein may be combined with other embodiments.

In the description of the embodiments of this application, the term "and/or" is merely an association relationship describing associated objects, indicating that three relationships may exist. For example, A and/or B may indicate the following three cases: presence of only A; presence of both A and B; and presence of only B. In addition, the character "/" in this specification generally indicates an "or" relationship between the contextually associated objects.

In the description of the embodiments of this application, the term "a plurality of" refers to two or more (including two); similarly, "a plurality of groups" refers to two or more groups (including two groups); and "a plurality of pieces" refers to two or more pieces (including two pieces).

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on the embodiments of this application.

In the description of the embodiments of this application, unless otherwise expressly specified and limited, the technical terms "installation", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. For those of ordinary skill in the art, the specific meanings of the above terms in the embodiments of this application can be understood according to specific situations.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

In the related art, in most cases, a battery cell assembly method is to insert the battery cell into a frame. The insertion process imposes high requirements on positioning processes, positioning accuracy, and devices. In addition, a large amount of adhesive is needed to improve strength and rigidity. However, the adhesive is high in cost and long in curing time, such that the battery cell is difficult to replace after adhesive application.

Based on the above considerations, to solve the problems of high position accuracy requirements and long assembly time during assembly of the battery cells, this application provides a battery. The battery includes a frame, a plurality of cylindrical battery cells, and at least one insulating and limiting strip. An accommodating cavity is provided in the frame. A side of the frame along a first direction is provided with an opening in communication with the accommodating cavity. The plurality of cylindrical battery cells are accommodated in the accommodating cavity. The insulating and limiting strip is accommodated in the accommodating cavity. Two adjacent ones of the cylindrical battery cells are separated and limited by at least one of the insulating and limiting strips.

In such a battery, when the cylindrical battery cells are assembled, the opening can be arranged upward along a vertical direction, and the plurality of cylindrical battery cells and the insulating and limiting strips can be loaded into the accommodating cavity through the opening from top to bottom. During assembly of the cylindrical battery cells, low position accuracy requirements are imposed during placement of the cylindrical battery cells and the insulating and limiting strips. After placement, the cylindrical battery cells and the insulating and limiting strips are automatically corrected to the most stable positions under the action of gravity, exhibiting self-adaptability, and allowing the arrangement to have self-stability. The positions of the cylindrical battery cells and the insulating and limiting strips are reliable. Moreover, as the number of cylindrical battery cells and insulating and limiting strips increases, the cooperation between the cylindrical battery cells and the insulating and limiting strips automatically becomes tighter, the installation is simple and takes less time, and the cylindrical battery cells can be cooperatively limited by the insulating and limiting strips and the frame.

The battery disclosed in the embodiments of this application may be used for electric apparatuses that use a battery as a power source or various energy storage systems that use a battery as an energy storage element. The electric apparatus may be but is not limited to a mobile phone, a tablet computer, a notebook computer, an electric toy, an electric tool, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

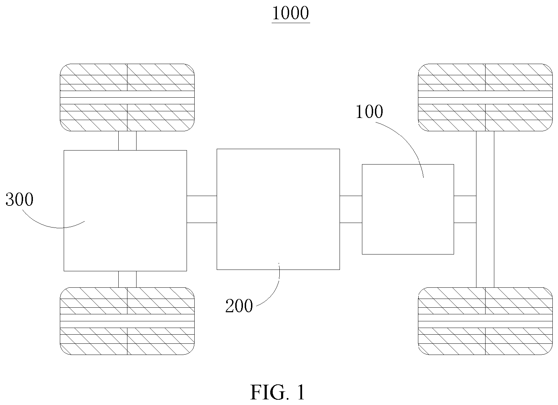

Referring to FIG. 1, FIG. 1 is a schematic structural diagram of a vehicle 1000 according to some embodiments of this application. The vehicle 1000 may be a fuel vehicle, a gas vehicle, or a new energy vehicle. The new energy vehicle may be a battery electric vehicle, a hybrid electric vehicle, an extended-range electric vehicle, or the like. A battery 100 is provided inside the vehicle 1000. The battery 100 may be provided at the bottom, head, or tail of the vehicle 1000. The battery 100 may be configured to supply power to the vehicle 1000. For example, the battery 100 may serve as an operational power source of the vehicle 1000. The vehicle 1000 may further include a controller 200 and a motor 300. The controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

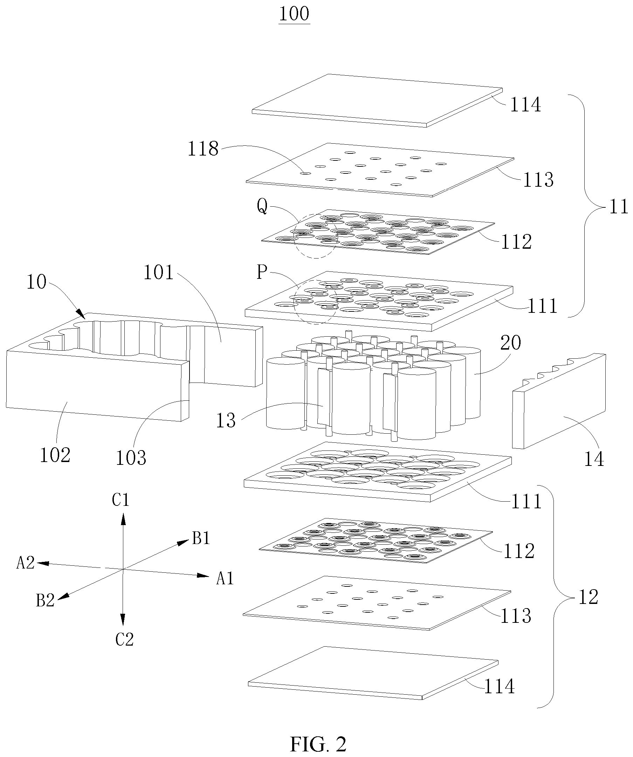

Referring to FIG. 2, FIG. 2 is an exploded view of a battery 100 according to some embodiments of this application. The battery 100 includes a frame body 10, a first cover plate assembly 11, a second cover plate assembly 12, and a cylindrical battery cell 20. An accommodating cavity 101 is provided in the frame body 10. The first cover plate assembly 11 and the second cover plate assembly 12 are respectively connected to two ends of the frame body 10 along a C1-C2 direction, so that the accommodating cavity 101 forms a relatively sealed state. The cylindrical battery cell 20 is accommodated in the accommodating cavity 101. An entirety formed by connecting the frame body 10, the first cover plate assembly 11, and the second cover plate assembly 12 may be of various shapes, such as a cylinder and a cuboid.

In the battery 100, a plurality of cylindrical battery cells 20 may be provided. The plurality of cylindrical battery cells 20 may be connected in series, parallel, or series-parallel, where being connected in series-parallel means a combination of series and parallel connections of the plurality of battery cells 20. The plurality of cylindrical battery cells 20 may be directly connected in series, parallel, or series-parallel, and then an entirety formed by the plurality of cylindrical battery cells 20 is accommodated in the accommodating cavity. Certainly, the battery 100 may alternatively be formed by a plurality of cylindrical battery cells 20 being connected in series, parallel or series-parallel first to form a battery module and then a plurality of battery modules being connected in series, parallel or series-parallel to form an entirety which is accommodated in the accommodating cavity. The battery 100 may further include other structures. For example, the battery 100 may further include a busbar configured to implement electrical connection between the plurality of cylindrical battery cells 20.

Each cylindrical battery cell 20 may be a secondary battery or a primary battery or may be a lithium-sulfur battery, a sodium-ion battery, or a magnesium-ion battery, but is not limited thereto.

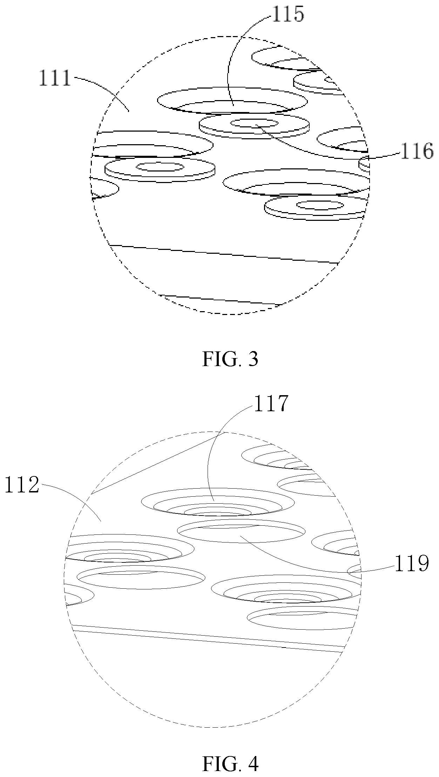

According to some embodiments of this application, referring to FIGs. 3 to 8, an embodiment of this application provides a battery 100. The battery 100 includes a frame 102, a plurality of cylindrical battery cells 20, and at least one insulating and limiting strip 13. An accommodating cavity 101 is provided in the frame 102. A side of the frame 102 along a first direction is provided with an opening 103 in communication with the accommodating cavity 101. The plurality of cylindrical battery cells 20 are accommodated in the accommodating cavity 101. The insulating and limiting strip 13 is accommodated in the accommodating cavity 101. Two adjacent cylindrical battery cells 20 are separated and limited by at least one insulating and limiting strip 13.

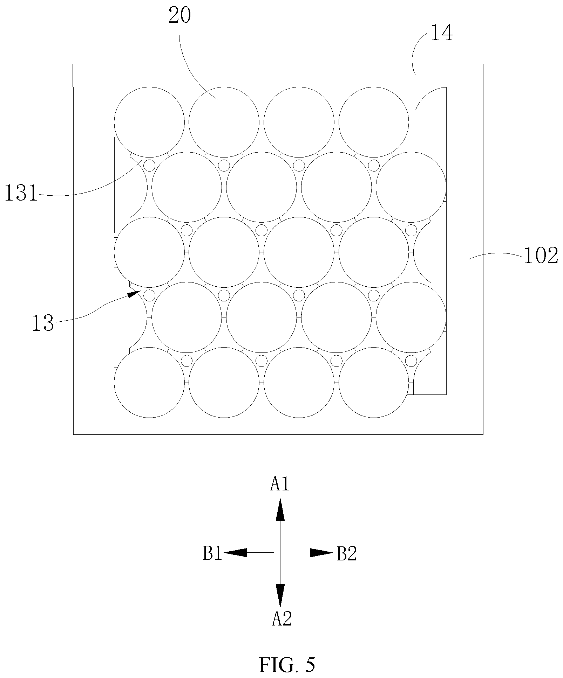

Optionally, in FIGs. 5 to 9, the battery 100 includes a plurality of rows of cylindrical battery cells 20. The plurality of rows of cylindrical battery cells 20 may be arranged at intervals along the first direction. A plurality of cylindrical battery cells 20 are included in each row of cylindrical battery cells 20. The plurality of cylindrical battery cells 20 are arranged at intervals along a third direction. The first direction includes an A1-A2 direction, a second direction includes a C1-C2 direction, and the third direction includes a B1-B2 direction. It can be understood that in another embodiment, one cylindrical battery cell 20 may be included in each row of cylindrical battery cells 20.

Referring to FIGs. 5 to 8, optionally, during assembly of the battery cells, the opening 103 of the frame 102 can be arranged upward along a vertical direction, that is, the opening 103 faces an A1 direction, and then the cylindrical battery cells 20 and the insulating and limiting strips 13 are loaded through the opening 103. When the cylindrical battery cells 20 and the insulating and limiting strips 13 are loaded, the cylindrical battery cells 20 are loaded into the accommodating cavity 101 through the opening 103 in a posture where a length direction of the cylindrical battery cells 20 is not parallel to a gravity direction (such as an A2 direction in the figure), and the insulating and limiting strips 13 are loaded into the accommodating cavity 101 through the opening 103 in a posture where a length direction of the insulating and limiting strips 13 is not parallel to a gravity direction, so that when the cylindrical battery cells 20 are in contact with a bottom surface of the accommodating cavity 101 or a lower layer of cylindrical battery cells 20, the length direction of the cylindrical battery cells 20 can be automatically corrected to be along the second direction under the action of gravity, and when the insulating and limiting strips 13 are in contact with the cylindrical battery cells 20, the length direction of the insulating and limiting strips 13 can be automatically corrected to be along the second direction under the action of gravity.

This application does not specifically limit the number of cylindrical battery cells 20 and insulating and limiting strips 13. Optionally, in an embodiment, the battery 100 includes N rows of cylindrical battery cells 20 arranged at intervals along the first direction, where N is a natural number greater than or equal to 1. The number of cylindrical battery cells 20 in each row of cylindrical battery cells 20 is M, where M is a natural number greater than or equal to 1. M and N are not both equal to 1, that is, the battery may include N×M cylindrical battery cells 20. In another embodiment, the number of cylindrical battery cells 20 in each row of cylindrical battery cells 20 may be different.

On one hand, the insulating and limiting strip 13 can separate the cylindrical battery cells 20 to achieve electrical isolation between two adjacent cylindrical battery cells 20, avoiding phenomena such as short circuits caused by contact between cylindrical surfaces of two adjacent cylindrical battery cells 20 in the same row or different rows. On the other hand, the insulating and limiting strip 13 can also limit the cylindrical battery cells 20 to prevent displacement of the cylindrical battery cells 20. Optionally, the material of the insulating and limiting strip 13 may be plastic.

The frame 102 can limit and fix the cylindrical battery cells 20 located in the accommodating cavity 101. Specifically, during assembly, under the action of gravity, the cylindrical battery cells 20 loaded later into the accommodating cavity 101 can press the cylindrical battery cells 20 loaded earlier into the accommodating cavity 101 through the insulating and limiting strips 13, making the cooperation between the cylindrical battery cells 20 and the insulating and limiting strips 13 automatically become tighter. Cylindrical battery cells 20 in contact with a side wall of the accommodating cavity 101 are limited by the frame 102.

This application does not specifically limit the material of the frame 102. Optionally, if the structural strength requirement for the battery 100 is low, the material of the frame 102 may be plastic. If the structural strength requirement for the battery 100 is high, the material of the frame 102 may be metal (such as iron and stainless steel). When the material of the frame 102 is metal, the frame 102 is subjected to insulation treatment. For example, insulating paint, an insulating film, or the like is provided on the frame 102 such that the frame 102 is electrically isolated from the cylindrical battery cells 20 and the like.

According to some embodiments of this application, optionally, the battery 100 includes a baffle 14. The baffle 14 is fixedly connected to a side surface of the frame 102 provided with the opening 103 and covers the opening 103, and the baffle 14 limits a cylindrical battery cell 20 in contact with the baffle 14.

Specifically, the frame 102 and the baffle 14 can be connected to form a frame body, which can limit and fix the cylindrical battery cells 20 located in the accommodating cavity 101, particularly the cylindrical battery cell 20 in contact with the baffle 14. More specifically, the baffle 14 may be fixedly connected to the frame 102 and limit a row of cylindrical battery cells 20 in contact with the baffle 14. During assembly, under the action of gravity, the cylindrical battery cells 20 loaded later into the accommodating cavity 101 can press the cylindrical battery cells 20 loaded earlier into the accommodating cavity 101 through the insulating and limiting strips 13, making the cooperation between the cylindrical battery cells 20 and the insulating and limiting strip 13 automatically become tighter. The cylindrical battery cells 20 in contact with the side wall of the accommodating cavity 101 are limited by the frame 102. After the last row of cylindrical battery cells 20 are installed, the baffle 14 is placed on the frame 102 and mechanically pre-fixed or mechanically fixed, so that the baffle 14 limits and fixes the last row of cylindrical battery cells 20. Optionally, the baffle 14 and the frame 102 may be fixedly connected by bolts, welding, and other manners. This is not specifically limited in this application.

This application does not specifically limit the material of the baffle 14. Optionally, if the structural strength requirement for the battery 100 is low, the material of the baffle 14 may be plastic. If the structural strength requirement for the battery 100 is high, the material of the baffle 14 may be metal (such as iron and stainless steel). When the material of the baffle 14 is metal, the baffle 14 is subjected to insulation treatment. For example, insulating paint, an insulating film, or the like is provided on the baffle 14 such that the baffle 14 is electrically isolated from the cylindrical battery cells 20 and the like. The materials of the baffle 14 and the frame 102 may be the same or different. This is not specifically limited in this application.

Through the baffle 14, a cylindrical battery cell 20 closest to the opening 103 can be limited and fixed, thereby allowing all cylindrical battery cells 20 in the accommodating cavity to be more effectively limited.

In addition, the battery 100 includes a first cover plate assembly 11 and a second cover plate assembly 12. The first cover plate assembly 11 and the second cover plate assembly 12 are respectively connected to two ends of the frame body along the second direction (such as the C1-C2 direction in FIG. 2), so that the accommodating cavity 101 forms a relatively sealed state. The cylindrical battery cell 20 is accommodated in the accommodating cavity 101. An entirety formed by connecting the frame body, the first cover plate assembly 11, and the second cover plate assembly 12 can protect the cylindrical battery cell 20.

In FIG. 2, the first cover plate assembly 11 is connected to an end of the frame 102 along a C1 direction, and the second cover plate assembly 12 is connected to an end of the frame 102 along a C2 direction. Optionally, in some embodiments of this application, the structures of the first cover plate assembly 11 and the second cover plate assembly 12 are the same.

The following takes the first cover plate assembly 11 as an example for specific description.

The first cover plate assembly 11 includes a first insulating plate 111, a busbar 112, a second insulating plate 113, and a cooling plate 114. The first insulating plate 111, the busbar 112, the second insulating plate 113, and the cooling plate 114 are sequentially arranged along a direction away from the cylindrical battery cell 20. The first insulating plate 111 can support and fix the busbar 112. The first insulating plate 111 is provided with a plurality of first through holes 115 along a thickness direction. The first through hole 115 can be used for welding an electrode of the cylindrical battery cell 20 to the busbar 112 and used for exhausting when the cylindrical battery cell 20 experiences thermal runaway. Optionally, the first insulating plate 111 is further provided with a plurality of second through holes 116 along the thickness direction. The second through hole 116 can allow a heat conducting member 16 (described later) on the insulating and limiting strip 13 to pass through. If there is no heat conducting member 16 on the insulating and limiting strip 13, the first insulating member may be not provided with the second through hole 116.

The busbar 112 is provided with a plurality of third through holes 117 along a thickness direction. The third through hole 117 may be in communication with the first through hole 115, and the third through hole 117 can be used for welding an electrode of the cylindrical battery cell 20 to the busbar 112 and used for exhausting when the cylindrical battery cell 20 experiences thermal runaway. Optionally, the busbar 112 is provided with a plurality of fifth through holes 119 along the thickness direction. The fifth through hole 119 is in communication with the second through hole 116, and the fifth through hole 119 can allow the heat conducting member 16 (described later) on the insulating and limiting strip 13 to pass through. If there is no heat conducting member 16 on the insulating and limiting strip 13, the busbar 112 may be not provided with the fifth through hole 119.

The second insulating plate 113 is provided with a plurality of fourth through holes 118 along a thickness direction. The fourth through hole 118 can be used for exhausting when the cylindrical battery cell 20 experiences thermal runaway. The cooling plate 114 can dissipate heat from inside the battery 100 to outside the battery 100. Optionally, when the insulating and limiting strip 13 is provided with the heat conducting member 16, the heat in the middle of the cylindrical battery cell 20 can be transferred to two ends of the heat conducting member 16 through the insulating and limiting strip 13, the two ends of the heat conducting member 16 transfer the heat to the cooling plate 114, and the cooling plate 114 dissipates the heat to the outside of the battery 100, thereby dissipating heat from the cylindrical battery cell 20. It can be understood that when the heat conducting member 16 is not provided on the insulating and limiting strip 13, the heat of the cylindrical battery cell 20 can also be transferred to the cooling plate 114. Optionally, the cooling plate 114 may be a liquid cooling plate.

Optionally, the second insulating plate 113 is provided with a sixth through hole along a thickness direction. The sixth through hole can allow the heat conducting member 16 to pass through, making the heat conducting member 16 closer to the cooling plate 114 and improving the heat dissipation efficiency of the cylindrical battery cell 20. The heat conducting member 16 may be in contact with the cooling plate 114 or may not be in contact with the cooling plate 114. This is not specifically limited in this application.

The busbar 112 of the second cover plate assembly 12 is welded to another electrode of the cylindrical battery cell 20.

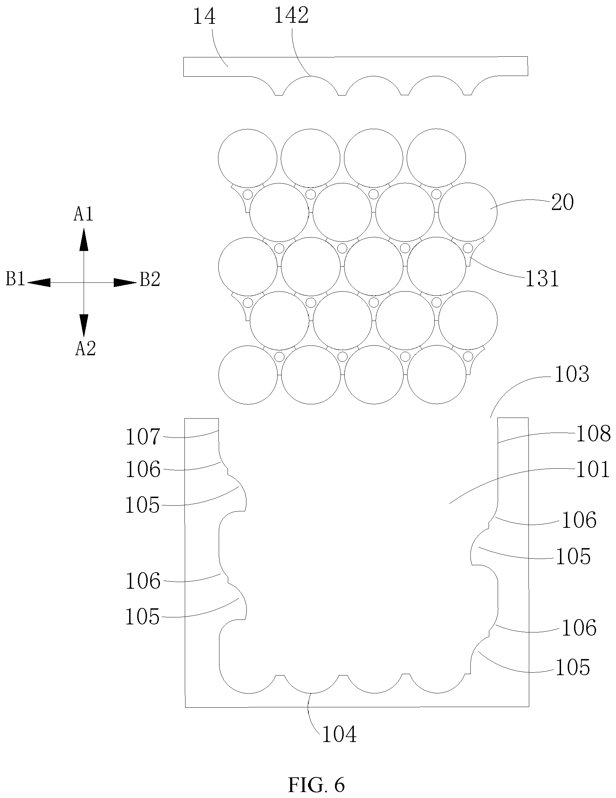

When the above cylindrical battery cells 20 are assembled, the opening 103 can be arranged upward along a vertical direction. For example, in FIG. 6, the opening 103 is arranged along the A1 direction. The gravity direction is along the A2 direction. A plurality of cylindrical battery cells 20 and a plurality of insulating and limiting strips 13 can be loaded into the accommodating cavity 101 through the opening 103 from top to bottom. During assembly of the cylindrical battery cells 20, low position accuracy requirements are imposed during placement of the cylindrical battery cells 20 and the insulating and limiting strips 13. After placement, the cylindrical battery cells 20 and the insulating and limiting strips 13 are automatically corrected to the most stable positions under the action of gravity, exhibiting self-adaptability, and allowing the arrangement to have self-stability. The positions of the cylindrical battery cells 20 and the insulating and limiting strips 13 are reliable. Moreover, as the number of cylindrical battery cells 20 and insulating and limiting strips 13 increases, the cooperation between the cylindrical battery cells 20 and the insulating and limiting strips 13 automatically becomes tighter, the installation is simple and takes less time, and the cylindrical battery cells 20 can be separated and limited by the frame 102 and the insulating and limiting strips 13.

Optionally, in the battery 100 of this application, a small number of cylindrical battery cells 20 may be allowed to be dummy cylindrical battery cells 20 or other structural members having the structures of the cylindrical battery cells 20 and used for implementing auxiliary functions. This is not specifically limited in this application.

Optionally, to improve the installation efficiency, dimensions (including height and radius) of all cylindrical battery cells 20 are the same.

According to some embodiments of this application, optionally, the length direction of the cylindrical battery cell 20 is along the second direction, the length direction of the insulating and limiting strip 13 is along the second direction, and the second direction and the first direction are perpendicular to each other.

In FIG. 2, the length direction of the insulating and limiting strip 13 is along the C1-C2 direction, and the length direction of the cylindrical battery cell 20 is along the C1-C2 direction. Thus, the length direction of the insulating and limiting strip 13 is parallel to the length direction of the cylindrical battery cell 20, allowing for a large contact area between the insulating and limiting strip 13 and the cylindrical battery cell 20 in the length direction, and helping to improve the limiting effect of the insulating and limiting strip 13 on the cylindrical battery cell 20.

According to some embodiments of this application, optionally, the battery 100 includes a plurality of rows of cylindrical battery cells 20 arranged at intervals along the first direction. A length direction of the cylindrical battery cell 20 is along a second direction. Two adjacent rows of cylindrical battery cells 20 along the first direction are separated and limited by at least one insulating and limiting strip 13, and/or two adjacent cylindrical battery cells 20 in a same row of cylindrical battery cells 20 are separated and limited by at least one insulating and limiting strip 136. The second direction and the first direction are perpendicular to each other.

In FIG. 5, the first direction is the A1-A2 direction. The plurality of rows of cylindrical battery cells 20 are arranged at intervals along the A1-A2 direction. At least one cylindrical battery cell 20 may be included in each row of cylindrical battery cells 20. When a plurality of cylindrical battery cells 20 are included in each row of cylindrical battery cells 20, the plurality of cylindrical battery cells 20 can be arranged at intervals along the third direction (B1-B2 direction). Two adjacent rows of cylindrical battery cells 20 along the first direction are separated and limited by at least one of the insulating and limiting strips 13; and two adjacent cylindrical battery cells 20 in a same row of cylindrical battery cells 20 are separated and limited by at least one of the insulating and limiting strips 13.

On one hand, the insulating and limiting strip 13 can separate the cylindrical battery cells 20 to achieve electrical isolation between two adjacent cylindrical battery cells 20, avoiding phenomena such as short circuits caused by contact between cylindrical surfaces of two adjacent cylindrical battery cells 20 in the same row or different rows. On the other hand, the insulating and limiting strip 13 can also limit the cylindrical battery cells 20 to prevent displacement of the cylindrical battery cells 20. The battery 100 includes the plurality of rows of cylindrical battery cells 20 arranged at intervals along the first direction, so that the arrangement of the cylindrical battery cells 20 is relatively regular, and a large number of cylindrical battery cells 20 can be placed, thereby helping to increase the energy density of the battery 100.

It can be understood that in another embodiment, two adjacent rows of cylindrical battery cells 20 along the first direction are separated and limited by at least one of the insulating and limiting strips 13, or two adjacent cylindrical battery cells 20 in a same row of cylindrical battery cells 20 are separated and limited by at least one of the insulating and limiting strips 13.

According to some embodiments of this application, optionally, the at least one insulating and limiting strip 13 includes a plurality of insulating and limiting strips 13. The plurality of insulating and limiting strips 13 are arranged in a row along a third direction. The two adjacent rows of cylindrical battery cells 20 along the first direction are limited by one row of insulating and limiting strips 13. The third direction, the first direction, and the second direction are perpendicular to each other.

In FIGs. 5 to 8, a plurality of insulating and limiting strips 13 are included in each row of insulating and limiting strips 13. The first direction includes the A1-A2 direction, and the third direction includes the B1-B2 direction. There are four rows of insulating and limiting strips 13 in the figure. The number of insulating and limiting strips 13 in each row of insulating and limiting strips 13 may be the same or different. There are five rows of cylindrical battery cells 20. The number of cylindrical battery cells 20 in each row of cylindrical battery cells 20 may be the same or different. In an embodiment, one insulating and limiting strip 13 may be included in each row of insulating and limiting strips 13.

It can be understood that in this application, the number of rows of insulating and limiting strips 13 and the number of insulating and limiting strips 13 are not specifically limited, and the number of rows of the cylindrical battery cells 20 and the number of the cylindrical battery cells 20 are not specifically limited.

The two adjacent rows of cylindrical battery cells 20 along the first direction are limited by one row of insulating and limiting strips 13, making the cooperation between the two adjacent rows of cylindrical battery cells 20 tight and the displacement less likely to occur.

According to some embodiments of this application, optionally, a bottom surface of the accommodating cavity 101 is provided with a plurality of first cylindrical surface accommodating grooves 104. The plurality of first cylindrical surface accommodating grooves 104 are arranged at intervals along the third direction. A length direction of the first cylindrical surface accommodating groove 104 is along the second direction. A plurality of cylindrical battery cells 20 in a row of cylindrical battery cells 20 closest to the bottom surface of the accommodating cavity 101 are partially accommodated in the plurality of first cylindrical surface accommodating grooves 104 in one-to-one correspondence. The third direction, the first direction, and the second direction are perpendicular to each other.

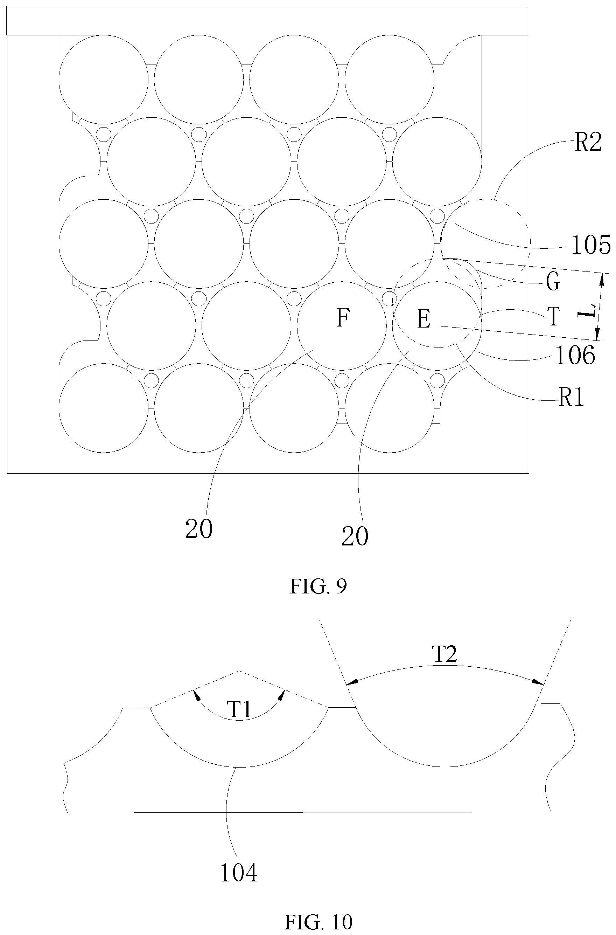

In FIG. 10, the structure of the first cylindrical surface accommodating groove 104 is described as follows: the first cylindrical surface accommodating groove 104 has a cylindrical surface, and the cylindrical surface is a side surface of a cylinder. When a part of the cylindrical battery cell 20 is accommodated in the first cylindrical surface accommodating groove 104, a cylindrical surface of the cylindrical battery cell 20 is in contact with the cylindrical surface (a contact surface) of the first cylindrical surface accommodating groove 104. Optionally, a radius of the cylindrical battery cell 20 is the same as a radius of a cylinder corresponding to the cylindrical surface of the first cylindrical surface accommodating groove 104. The first insulating and limiting strip 131 may be in tangent contact with cylindrical surfaces of all of a plurality of cylindrical battery cells 20 in two adjacent rows along the first direction.

The first cylindrical surface accommodating groove 104 is used to adapt to the first row of cylindrical battery cells 20 and can limit the first row of cylindrical battery cells 20 on the bottom surface of the accommodating cavity 101, avoiding or reducing displacement of the cylindrical battery cells 20.

According to some embodiments of this application, optionally, the at least one insulating and limiting strip 13 includes a first insulating and limiting strip 131. The first insulating and limiting strip 131 is provided with a second cylindrical surface accommodating groove 132, a third cylindrical surface accommodating groove 133, and a fourth cylindrical surface accommodating groove 134. In the two adjacent rows of cylindrical battery cells 20 along the first direction, two adjacent cylindrical battery cells 20 in one row of cylindrical battery cells 20 are respectively partially accommodated along the third direction in the second cylindrical surface accommodating groove 132 and the third cylindrical surface accommodating groove 133. One cylindrical battery cell 20 in the other row of cylindrical battery cells 20 is partially accommodated in the fourth cylindrical surface accommodating groove 134. The third direction, the first direction, and the second direction are perpendicular to each other.

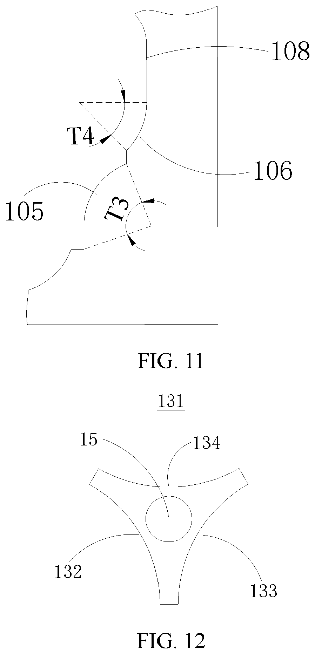

Referring to FIGs. 5 and 6, all insulating and limiting strips 13 are first insulating and limiting strips 131. Optionally, referring to FIG. 12, the shapes of the second cylindrical surface accommodating groove 132, the third cylindrical surface accommodating groove 133, and the fourth cylindrical surface accommodating groove 134 are the same, thereby making the manufacturing process simple and efficient.

One first insulating and limiting strip 131 can limit three cylindrical battery cells 20 respectively, where two cylindrical battery cells 20 are two adjacent cylindrical battery cells 20 in a same row of cylindrical battery cells 20, and another cylindrical battery cell 20 is one cylindrical battery cell 20 in another row of cylindrical battery cells 20 adjacent to the row of cylindrical battery cells 20 along the first direction.

The structural description of the second cylindrical surface accommodating groove 132, the third cylindrical surface accommodating groove 133, and the fourth cylindrical surface accommodating groove 134 may refer to the structural description of the above first cylindrical surface accommodating groove 104, which is not elaborated in detail herein. Optionally, radii of cylinders corresponding to the second cylindrical surface accommodating groove 132, the third cylindrical surface accommodating groove 133, and the fourth cylindrical surface accommodating groove 134 are the same and equal to the radius of the cylindrical battery cell 20.

The second cylindrical surface accommodating groove 132, the third cylindrical surface accommodating groove 133, and the fourth cylindrical surface accommodating groove 134 of one first insulating and limiting strip 131 can limit three cylindrical battery cells 20 in contact with the first insulating and limiting strip 131, avoiding or reducing displacement of the cylindrical battery cells 20. The first insulating and limiting strip 131 is simple to manufacture, the battery is lightweight, and after assembly, individual cylindrical battery cells 20 are conveniently replaced. In addition, the first insulating and limiting strip 131 that limits fewer cylindrical battery cells 20 can reduce maintenance costs during replacement.

It can be understood that in another embodiment, the structure of the insulating and limiting strip 13 may alternatively be another structure and is not limited to the structure of the first insulating and limiting strip 131. This is not specifically limited herein.

According to some embodiments of this application, optionally, the at least one insulating and limiting strip 13 includes a second insulating and limiting strip 135. The second insulating and limiting strip 135 is provided with a fifth cylindrical surface accommodating groove 136, a sixth cylindrical surface accommodating groove 137, a seventh cylindrical surface accommodating groove 138, and an eighth cylindrical surface accommodating groove 139.

In the two adjacent rows of cylindrical battery cells 20 along the first direction, two adjacent cylindrical battery cells 20 in one row of cylindrical battery cells 20 are respectively partially accommodated along the third direction in the fifth cylindrical surface accommodating groove 136 and the sixth cylindrical surface accommodating groove 137. Two adjacent cylindrical battery cells 20 in the other row of cylindrical battery cells 20 are respectively partially accommodated along the third direction in the seventh cylindrical surface accommodating groove 138 and the eighth cylindrical surface accommodating groove 139. The third direction, the first direction, and the second direction are perpendicular to each other.

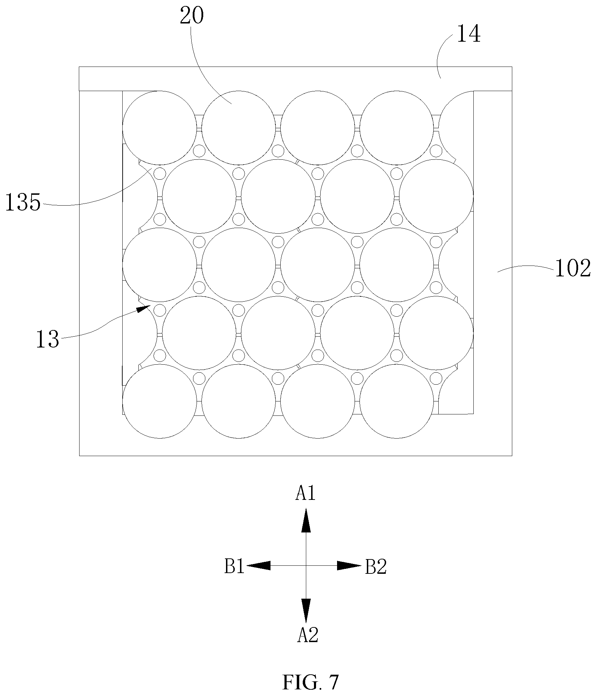

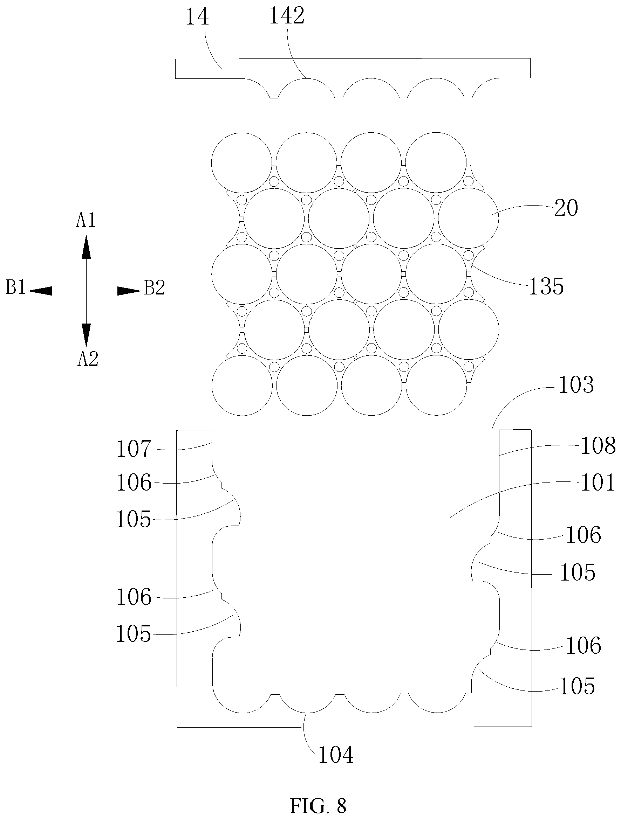

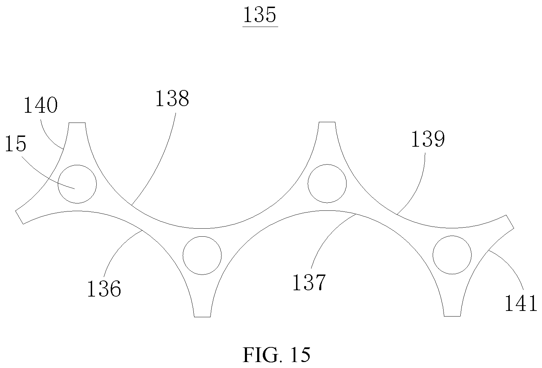

Referring to FIGs. 7 and 8, all insulating and limiting strips 13 are second insulating and limiting strips 135. Optionally, referring to FIG. 15, the shapes of the fifth cylindrical surface accommodating groove 136 and the eighth cylindrical surface accommodating groove 139 are the same, and the shapes of the sixth cylindrical surface accommodating groove 137 and the seventh cylindrical surface accommodating groove 138 are the same, thereby making the manufacturing process simple and efficient.

One second insulating and limiting strip 135 can limit four cylindrical battery cells 20, where two cylindrical battery cells 20 are two adjacent cylindrical battery cells 20 in a same row of cylindrical battery cells 20, and the other two cylindrical battery cells 20 are two adjacent cylindrical battery cells 20 in another row of cylindrical battery cells 20 adjacent to the row of cylindrical battery cells 20 along the first direction.

The structural description of the fifth cylindrical surface accommodating groove 136, the sixth cylindrical surface accommodating groove 137, the seventh cylindrical surface accommodating groove 138, and the eighth cylindrical surface accommodating groove 139 may refer to the structural description of the above first cylindrical surface accommodating groove 104, which is not elaborated in detail herein. Optionally, radii of cylinders corresponding to the fifth cylindrical surface accommodating groove 136, the sixth cylindrical surface accommodating groove 137, the seventh cylindrical surface accommodating groove 138, and the eighth cylindrical surface accommodating groove 139 are the same and equal to the radius of the cylindrical battery cell 20. The second insulating and limiting strip 135 may be in tangent contact with cylindrical surfaces of all of a plurality of cylindrical battery cells 20 in two adjacent rows along the first direction.

The fifth cylindrical surface accommodating groove 136, the sixth cylindrical surface accommodating groove 137, the seventh cylindrical surface accommodating groove 138, and the eighth cylindrical surface accommodating groove 139 of one second insulating and limiting strip 135 can limit four cylindrical battery cells 20 in contact with the second insulating and limiting strip 135, avoiding or reducing displacement of the cylindrical battery cells 20. Optionally, in an embodiment, compared to the first insulating and limiting strip 131, in the second insulating and limiting strip 135, cylindrical surfaces (contact surfaces) of the fifth cylindrical surface accommodating groove 136, the sixth cylindrical surface accommodating groove 137, the seventh cylindrical surface accommodating groove 138, and the eighth cylindrical surface accommodating groove 139 have larger sector angles, achieving the maximum space utilization, and allowing the battery to have a more stable structure and higher strength. In addition, one second insulating and limiting strip 135 can limit more cylindrical battery cells 20, so that when a same number of cylindrical battery cells 20 are limited, the number of insulating and limiting strips 13 used and the installation time can be reduced, thereby improving the installation efficiency and reducing costs. To further improve the installation efficiency, the second insulating and limiting strip 135 can be designed as a shape structure spanning more cylindrical battery cells 20.

It can be understood that in another embodiment, the structure of the insulating and limiting strip 13 may alternatively be another structure and is not limited to the structure of the second insulating and limiting strip 135. This is not specifically limited herein. In another embodiment, the insulating and limiting strip 13 may include the first insulating and limiting strip 131 and the second insulating and limiting strip 135 as well as an insulating and limiting strip 13 of another structure. This is not specifically limited in this application.

According to some embodiments of this application, optionally, the second insulating and limiting strip 135 is provided with a ninth cylindrical surface accommodating groove 140 and a tenth cylindrical surface accommodating groove 141.

In the two adjacent rows of cylindrical battery cells 20 along the first direction, three adjacent cylindrical battery cells 20 in one row of cylindrical battery cells 20 are partially accommodated along the third direction in the fifth cylindrical surface accommodating groove 136, the sixth cylindrical surface accommodating groove 137, and the tenth cylindrical surface accommodating groove 141 in one-to-one correspondence. Three adjacent cylindrical battery cells 20 in the other row of cylindrical battery cells 20 are partially accommodated along the third direction in the ninth cylindrical surface accommodating groove 140, the seventh cylindrical surface accommodating groove 138, and the eighth cylindrical surface accommodating groove 139 in one-to-one correspondence.

Referring to FIG. 15, optionally, the shapes of the ninth cylindrical surface accommodating groove 140 and the tenth cylindrical surface accommodating groove 141 are the same, thereby making the manufacturing process simple and efficient.

In these embodiments, one second insulating and limiting strip 135 can limit six cylindrical battery cells 20, where three cylindrical battery cells 20 are three adjacent cylindrical battery cells 20 in a same row of cylindrical battery cells 20, and the other three cylindrical battery cells 20 are three adjacent cylindrical battery cells 20 in another row of cylindrical battery cells 20 adjacent to the row of cylindrical battery cells 20 along the first direction.

The structural description of the ninth cylindrical surface accommodating groove 140 and the tenth cylindrical surface accommodating groove 141 may refer to the structural description of the above first cylindrical surface accommodating groove 104, which is not elaborated in detail herein. Optionally, radii of cylinders corresponding to the fifth cylindrical surface accommodating groove 136, the sixth cylindrical surface accommodating groove 137, the seventh cylindrical surface accommodating groove 138, the eighth cylindrical surface accommodating groove 139, the ninth cylindrical surface accommodating groove 140, and the tenth cylindrical surface accommodating groove 141 are the same and equal to the radius of the cylindrical battery cell 20.

The fifth cylindrical surface accommodating groove 136, the sixth cylindrical surface accommodating groove 137, the seventh cylindrical surface accommodating groove 138, the eighth cylindrical surface accommodating groove 139, the ninth cylindrical surface accommodating groove 140, and the tenth cylindrical surface accommodating groove 141 can limit six cylindrical battery cells 20 in contact with the second insulating and limiting strip 135, avoiding or reducing displacement of the cylindrical battery cells 20. In addition, one second insulating and limiting strip 135 can limit more cylindrical battery cells 20, so that when a same number of cylindrical battery cells 20 are limited, the number of insulating and limiting strips 13 used and the installation time can be reduced, thereby improving the installation efficiency and reducing costs.

According to some embodiments of this application, optionally, the fifth cylindrical surface accommodating groove 136, the sixth cylindrical surface accommodating groove 137, and the tenth cylindrical surface accommodating groove 141 are sequentially arranged along the third direction. Sector angles of the sixth cylindrical surface accommodating groove 137, the fifth cylindrical surface accommodating groove 136, and the tenth cylindrical surface accommodating groove 141 sequentially decrease.

The ninth cylindrical surface accommodating groove 140, the seventh cylindrical surface accommodating groove 138, and the eighth cylindrical surface accommodating groove 139 are sequentially arranged along the third direction. Sector angles of the seventh cylindrical surface accommodating groove 138, the eighth cylindrical surface accommodating groove 139, and the ninth cylindrical surface accommodating groove 140 sequentially decrease.

Referring to FIGs. 7, 8, and 15, in two adjacent second insulating and limiting strips 135 in a same row of second insulating and limiting strips 135, the tenth cylindrical surface accommodating groove 141 of one second insulating and limiting strip 135 and the fifth cylindrical surface limiting groove 136 of the other second insulating and limiting strip 135 can jointly limit a same cylindrical battery cell 20 located below. In two adjacent second insulating and limiting strips 135 in a same row of second insulating and limiting strips 135, the ninth cylindrical surface accommodating groove 140 of one second insulating and limiting strip 135 and the eighth cylindrical surface limiting groove 139 of the other second insulating and limiting strip 135 can jointly limit a same cylindrical battery cell 20 located above, achieving a good limiting effect.

According to some embodiments of this application, optionally, a side surface of the baffle 14 facing the accommodating cavity 101 is provided with a plurality of eleventh cylindrical surface accommodating grooves 142. The plurality of eleventh cylindrical surface accommodating grooves 142 are arranged at intervals along the third direction. A plurality of cylindrical battery cells 20 in one row of cylindrical battery cells 20 in contact with the baffle 14 are partially accommodated in the plurality of eleventh cylindrical surface accommodating grooves 142 in one-to-one correspondence. The third direction and the first direction are perpendicular to each other.

In FIGs. 6 and 8, the side surface of the baffle 14 facing the accommodating cavity 101 is a bottom surface of the baffle 14. The third direction includes the B1-B2 direction. The eleventh cylindrical surface accommodating groove 142 can limit the uppermost row of cylindrical battery cells 20. The third direction, the first direction, and the second direction are perpendicular to each other.

The structural description of the eleventh cylindrical surface accommodating groove 142 may refer to the structural description of the above first cylindrical surface accommodating groove 104, which is not elaborated in detail herein.

The eleventh cylindrical surface accommodating groove 142 can limit the cylindrical battery cell 20 in contact with the baffle 14, avoiding or reducing displacement of the cylindrical battery cell 20.

According to some embodiments of this application, optionally, a sector angle of the cylindrical surface accommodating groove is less than or equal to 180 degrees.

Specifically, a sector angle of the first cylindrical surface accommodating groove 104 is less than or equal to 180 degrees. A sector angle of the second cylindrical surface accommodating groove 132 is less than or equal to 180 degrees. A sector angle of the third cylindrical surface accommodating groove 133 is less than or equal to 180 degrees. A sector angle of the fourth cylindrical surface accommodating groove 134 is less than or equal to 180 degrees. A sector angle of the fifth cylindrical surface accommodating groove 136 is less than or equal to 180 degrees. A sector angle of the sixth cylindrical surface accommodating groove 137 is less than or equal to 180 degrees. A sector angle of the seventh cylindrical surface accommodating groove 138 is less than or equal to 180 degrees. A sector angle of the eighth cylindrical surface accommodating groove 139 is less than or equal to 180 degrees. A sector angle of the ninth cylindrical surface accommodating groove 140 is less than or equal to 180 degrees. A sector angle of the tenth cylindrical surface accommodating groove 141 is less than or equal to 180 degrees. A sector angle of the eleventh cylindrical surface accommodating groove 142 is less than or equal to 180 degrees.

Referring to FIG. 10, for the first cylindrical surface accommodating groove 104, the sector angle of the first cylindrical surface accommodating groove 104 may be an included angle T1 between two connection lines formed by two ends of a cylindrical surface along a circumferential direction of the first cylindrical surface accommodating groove 104 and a center of a cylinder corresponding to the cylindrical surface.

The sector angle of the first cylindrical surface accommodating groove 104 is less than or equal to 180 degrees, and a groove opening angle of the first cylindrical surface accommodating groove 104 is large, thereby allowing the cylindrical battery cell 20 to easily enter the first cylindrical surface accommodating groove 104, and improving the installation efficiency. The groove opening angle may be an included angle T2 between two lines tangent to two ends of the cylindrical surface along the circumferential direction of the first cylindrical surface accommodating groove 104. The sum of the included angle T1 and the included angle T2 is 180 degrees.

According to some embodiments of this application, optionally, the sector angle of the cylindrical surface accommodating groove is greater than 45 degrees.

Specifically, the sector angle of the first cylindrical surface accommodating groove 104 is greater than 45 degrees and less than or equal to 180 degrees. The sector angle of the second cylindrical surface accommodating groove 132 is greater than 45 degrees and less than or equal to 180 degrees. The sector angle of the third cylindrical surface accommodating groove 133 is greater than 45 degrees and less than or equal to 180 degrees. The sector angle of the fourth cylindrical surface accommodating groove 134 is greater than 45 degrees and less than or equal to 180 degrees. The sector angle of the fifth cylindrical surface accommodating groove 136 is greater than 45 degrees and less than or equal to 180 degrees. The sector angle of the sixth cylindrical surface accommodating groove 137 is greater than 45 degrees and less than or equal to 180 degrees. The sector angle of the seventh cylindrical surface accommodating groove 138 is greater than 45 degrees and less than or equal to 180 degrees. The sector angle of the eighth cylindrical surface accommodating groove 139 is greater than 45 degrees and less than or equal to 180 degrees. The sector angle of the ninth cylindrical surface accommodating groove 140 is greater than 45 degrees and less than or equal to 180 degrees. The sector angle of the tenth cylindrical surface accommodating groove 141 is greater than 45 degrees and less than or equal to 180 degrees. The sector angle of the eleventh cylindrical surface accommodating groove 142 is greater than 45 degrees and less than or equal to 180 degrees.

The sector angle of the cylindrical surface accommodating groove is greater than 45 degrees and less than or equal to 180 degrees, and the groove opening angle of the cylindrical surface accommodating groove is appropriate, thereby improving the installation efficiency and limiting effect of the cylindrical battery cell 20 while ensuring the mechanical strength of the frame 102 and the insulating and limiting strip 13.

In some examples, the sector angle of the cylindrical surface accommodating groove disclosed in this application may be 180 degrees, 170 degrees, 160 degrees, 150 degrees, 140 degrees, 130 degrees, 120 degrees, 110 degrees, 100 degrees, 90 degrees, 80 degrees, 70 degrees, 60 degrees, 50 degrees, 45 degrees, 40 degrees, 35 degrees, 30 degrees, or other values less than or equal to 180 degrees. This is not specifically limited in this application.

According to some embodiments of this application, optionally, at least one side wall of the accommodating cavity 101 along the third direction is provided with a plurality of first cylindrical surface limiting portions 105 and a plurality of second cylindrical surface limiting portions 106, where the first cylindrical surface limiting portion 105 and the second cylindrical surface limiting portion 106 are alternately arranged along the first direction on a same side wall. The third direction, the first direction, and the second direction are perpendicular to each other.

The first cylindrical surface limiting portion 105 limits an insulating and limiting strip 13 in contact with the first cylindrical surface limiting portion 105 along the third direction. The second cylindrical surface limiting portion 106 limits a cylindrical battery cell 20 in contact with the second cylindrical surface limiting portion 106 along the third direction.

In FIGs. 6 and 8, the third direction includes the B1-B2 direction. Two side walls of the accommodating cavity 101 along the third direction are each provided with a plurality of first cylindrical surface limiting portions 105 and a plurality of second cylindrical surface limiting portions 106. The first cylindrical surface limiting portion 105 and the second cylindrical surface limiting portion 106 are alternately arranged along the first direction on each side wall. For ease of description, a side wall in a B1 direction is a first side wall 107, and a side wall in a B2 direction is a second side wall 108.

In an embodiment, when the cylindrical battery cells 20 and the insulating and limiting strips 13 are installed, the opening 103 of the frame 102 is arranged upward, a plurality of cylindrical battery cells 20 are first loaded to form the first row of cylindrical battery cells 20 on the bottom surface of the accommodating cavity 101, then the first row of insulating and limiting strips 13 are placed on the first row of cylindrical battery cells 20, so that the insulating and limiting strips 13 separate two adjacent cylindrical battery cells 20 in the first row of cylindrical battery cells 20. Then, the second row of cylindrical battery cells 20 are placed on the first row of insulating and limiting strips 13, then the second row of insulating and limiting strips 13 are placed on the second row of cylindrical battery cells 20, and so on. No insulating and limiting strip 13 needs to be placed above the last row of cylindrical battery cells 20. Finally, the baffle 14 is placed on the frame 102, covers the opening 103, and is mechanically pre-fixed or mechanically fixed.

An insulating and limiting strip 13 in contact with the first cylindrical surface limiting portion 105 is an insulating and limiting strip 13 closest to the side wall in a row of insulating and limiting strips 13, and a cylindrical battery cell 20 in contact with the second cylindrical surface limiting portion 106 is a cylindrical battery cell 20 closest to the side wall in a row of cylindrical battery cells 20.

The first cylindrical surface limiting portion 105 and the second cylindrical surface limiting portion 106 are alternately arranged along the first direction. In an embodiment, referring to FIGs. 6 and 8, on the second side wall 108, the lowermost is the first cylindrical surface limiting portion 105, and along an upward direction of the first direction (such as the A1 direction), the first cylindrical surface limiting portion 105 and the second cylindrical surface limiting portion 106 are sequentially and alternately arranged. On the first side wall 107, due to the presence of the first cylindrical surface accommodating groove 104, the lowermost is the first cylindrical surface limiting portion 105, and along the upward direction of the first direction (such as the A1 direction), the first cylindrical surface limiting portion 105 and the second cylindrical surface limiting portion 106 are sequentially and alternately arranged. In another embodiment, if the first cylindrical surface accommodating groove 104 is not present, the lowermost is the second cylindrical surface limiting portion 106, and along the upward direction of the first direction (such as the A1 direction), the second cylindrical surface limiting portion 106 and the first cylindrical surface limiting portion 105 are sequentially and alternately arranged.

For odd-numbered rows of cylindrical battery cells 20, the second cylindrical surface limiting portion 106 on the first side wall 107 limits the cylindrical battery cell 20 in contact with the second cylindrical surface limiting portion 106. Referring to FIGs. 6 and 8, when the bottom surface of the accommodating cavity 101 is provided with the first cylindrical surface accommodating groove 104, for odd-numbered rows of cylindrical battery cells 20 except the first row, the second cylindrical surface limiting portion 106 on the first side wall 107 limits the cylindrical battery cell 20 in contact with the second cylindrical surface limiting portion 106. For even-numbered rows of cylindrical battery cells 20, the second cylindrical surface limiting portion 106 on the second side wall 108 limits the cylindrical battery cell 20 in contact with the second cylindrical surface limiting portion 106. For odd-numbered rows of insulating and limiting strips 13, the first cylindrical surface limiting portion 105 on the second side wall 108 limits the insulating and limiting strip 13 in contact with the first cylindrical surface limiting portion 105. For even-numbered rows of insulating and limiting strips 13, the first cylindrical surface limiting portion 105 on the first side wall 107 limits the insulating and limiting strip 13 in contact with the first cylindrical surface limiting portion 105.

In another embodiment, on the second side wall 108, the lowermost is the second cylindrical surface limiting portion 106, and along the upward direction of the first direction (such as the A1 direction), the second cylindrical surface limiting portion 106 and the first cylindrical surface limiting portion 105 are sequentially and alternately arranged. On the first side wall 107, the lowermost is the first cylindrical surface limiting portion 105, and along the upward direction of the first direction (such as the A1 direction), the first cylindrical surface limiting portion 105 and the second cylindrical surface limiting portion 106 are sequentially and alternately arranged. The limiting of the insulating and limiting strip 13 by the first cylindrical surface limiting portion 105 and the limiting of the cylindrical battery cell 20 by the second cylindrical surface limiting portion 106 may refer to the description of the above embodiments, which is not elaborated in detail herein.

The first cylindrical surface limiting portion 105 limits the insulating and limiting strip 13 in contact with the first cylindrical surface limiting portion 105, and the second cylindrical surface limiting portion 106 limits the cylindrical battery cell 20 in contact with the second cylindrical surface limiting portion 106, so that in cooperation with the gravity actions of the insulating and limiting strip 13 and the cylindrical battery cell 20 and the gravity actions of the insulating and limiting strip 13 and cylindrical battery cell 20 located above, the cooperation between the cylindrical battery cell 20 and the insulating and limiting strip 13 can automatically become tighter, and the installation is simple.

In FIGs. 6 and 8, the first cylindrical surface limiting portion 105 has a cylindrical surface protruding from the side wall of the accommodating cavity 101 to the inside of the accommodating cavity 101, where the cylindrical surface is a side surface of a cylinder, and the first cylindrical surface limiting portion 105 can be formed as a protrusion. When the first cylindrical surface limiting portion 105 limits the insulating and limiting strip 13, a cylindrical surface of a cylindrical surface accommodating groove of the insulating and limiting strip 13 is in contact with a cylindrical surface of the first cylindrical surface limiting portion 105. Optionally, the radius of the cylindrical battery cell 20 is the same as a radius of a cylinder corresponding to the cylindrical surface of the first cylindrical surface limiting portion 105.

The second cylindrical surface limiting portion 106 has a cylindrical surface recessed from the inside of the accommodating cavity 101 to the outside, where the cylindrical surface is a side surface of a cylinder, and the second cylindrical surface limiting portion 106 may be formed with a recess. When the second cylindrical surface limiting portion 106 limits the cylindrical battery cell 20, a cylindrical surface of the cylindrical battery cell 20 is in contact with the cylindrical surface of the second cylindrical surface limiting portion 106. Optionally, the radius of the cylindrical battery cell 20 is the same as a radius of a cylinder corresponding to the cylindrical surface of the second cylindrical surface limiting portion 106.

According to some embodiments of this application, optionally, a sector angle of the first cylindrical surface limiting portion 105 is less than or equal to 180 degrees, and a sector angle of the second cylindrical surface limiting portion 106 is less than or equal to 180 degrees. A sector angle of a cylindrical surface limiting portion may be an included angle between two connection lines formed by two ends of a cylindrical surface along a circumferential direction of the cylindrical surface limiting portion and a center of a cylinder corresponding to the cylindrical surface. Referring to FIG. 11, the sector angle of the first cylindrical surface limiting portion 105 is an included angle T3, where the included angle T3 is less than or equal to 180 degrees. A sector angle of the second cylindrical surface limiting portion 106 is an included angle T4, where the included angle T4 is less than or equal to 180 degrees.

According to some embodiments of this application, optionally, a distance between the lowest end of the first cylindrical surface limiting portion 105 and a center of the cylindrical battery cell 20 located below is L, where L > R + d, R is a radius of the cylindrical battery cell 20, and d is a safety margin. Along the first direction, a transition boundary G below the first cylindrical surface limiting portion 105 is located outside a first virtual circle R1. The first virtual circle R1 is defined as a virtual circle, where the virtual circle is tangent to a tangent line T to a vertex of a cylindrical surface of the second cylindrical surface limiting portion 106 located below the first cylindrical surface limiting portion 105 along the first direction, passes through the lowest end of the first cylindrical surface limiting portion 105, and has a radius equal to the radius of the cylindrical battery cell 20. Therefore, the cylindrical battery cell 20 can be installed at least downward along the first direction or installed along the second direction.

Referring to FIG. 9, on the second side wall 108, the lowermost is the first cylindrical surface limiting portion 105, and along the A1 direction, the first cylindrical surface limiting portion 105 and the second cylindrical surface limiting portion 106 are sequentially and alternately arranged. The first cylindrical surface limiting portion 105 in contact with the insulating and limiting strips 13 in the third row of insulating and limiting strips 13 corresponds to a cylindrical battery cell 20 located below (hereinafter referred to as an E cylindrical battery cell 20). An excessively large sector angle of the first cylindrical surface limiting portion 105 may lead to difficulty in installing the E cylindrical battery cell 20 located below. As shown in an auxiliary illustration figure of FIG. 9, when the sector angle of the first cylindrical surface limiting portion 105 is significantly increased along a second virtual circle R2, if an F cylindrical battery cell 20 is placed first, the E cylindrical battery cell 20 cannot be placed conveniently. To make the placement of a same row of cylindrical battery cells 20 not affected by a placement order and maximize the installation convenience, the distance L between the lowest end of the first cylindrical surface limiting portion 105 and the center of the cylindrical battery cell 20 located below (which can also be understood as the distance between the center of the E cylindrical battery cell 20 and the lowest end of the first cylindrical surface limiting portion 105 located above) satisfies L > R + d, where R is the radius of the cylindrical battery cell 20, and d is a safety margin. d can be determined based on the placement convenience, the compactness of the battery 100, and the mechanical strength of the first cylindrical surface limiting portion 105. Therefore, the E cylindrical battery cell 20 can be installed at least downward along the first direction such as a direction shown as A2 in FIG. 8, or installed along the second direction.

According to some embodiments of this application, optionally, under the condition that the mechanical strength of the first cylindrical surface limiting portion 105 is satisfied, the placement of the same row of cylindrical battery cells may be less affected by the placement order, thereby maximizing the installation convenience; and d > R × 1/3.

Along the first direction, the transition boundary G below the first cylindrical surface limiting portion 105 is located outside the first virtual circle R1. The first virtual circle R1 is defined as a virtual circle, where the virtual circle is tangent to the tangent line T to the vertex of the cylindrical surface of the second cylindrical surface limiting portion 106 located below the first cylindrical surface limiting portion 105 along the first direction, passes through the lowest end of the first cylindrical surface limiting portion 105, and has a radius equal to the radius of the cylindrical battery cell 20.

The vertex of the cylindrical surface of the second cylindrical surface limiting portion 106 may be a point on an end of the cylindrical surface of the second cylindrical surface limiting portion 106 along a circumferential direction. The end is one of two ends of the cylindrical surface of the second cylindrical surface limiting portion 106 along the circumferential direction, which is close to the first cylindrical surface limiting portion 105 located above.

The transition boundary G connects the lowest end of the first cylindrical surface limiting portion 105 and a vertex end of the lower second cylindrical surface limiting portion 106 located below and adjacent to the first cylindrical surface limiting portion 105.

According to some embodiments of this application, optionally, referring to FIGs. 12 to 15, the insulating and limiting strip 13 includes a hole 15. The hole 15 runs through at least one side surface of the insulating and limiting strip 13 along the length direction.

Optionally, in FIG. 2, the length direction of the insulating and limiting strip 13 is along the second direction, and the second direction includes the C1-C2 direction. The hole 15 runs through two side surfaces of the insulating and limiting strip 13 along the second direction, and the hole 15 is a through hole running through the insulating and limiting strip 13 along the second direction. It can be understood that in another embodiment, the hole 15 may run through a side surface of the insulating and limiting strip 13 along the second direction. For example, the hole 15 runs through a side surface of the insulating and limiting strip 13 along the C1 direction, or the hole 15 runs through a side surface of the insulating and limiting strip 13 along the C2 direction. This is not specifically limited in this application.

This application does not specifically limit the shape and number of the hole 15 of one insulating and limiting strip 13. Optionally, the shape of the hole 15 is cylindrical, and one insulating and limiting strip 13 is provided with one hole 15.

The provision of the hole 15 helps to reduce the weight of the insulating and limiting strip 13, thereby reducing materials of the insulating and limiting strip 13. The materials dropped due to the provision of the hole 15 can be reused, so that the cost of the insulating and limiting strip 13 can also be reduced.

According to some embodiments of this application, optionally, the battery 100 includes a heat conducting member 16. The heat conducting member 16 is at least partially located in the hole 15.

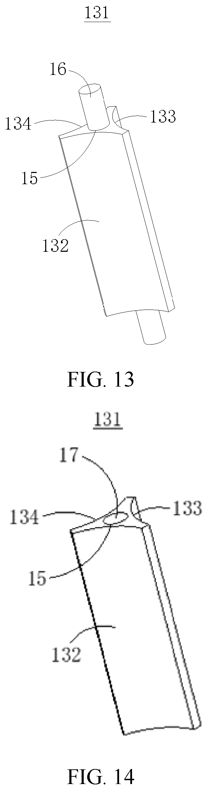

Optionally, in FIG. 13, the hole 15 runs through the insulating and limiting strip 13 along the second direction. The heat conducting member 16 passes through the hole 15. Two ends of the heat conducting member 16 along the second direction extend out of the hole 15. Heat received by the heat conducting member 16 is transferred to the two ends and then dissipated through the two ends.

This application does not specifically limit the material of the heat conducting member 16. Optionally, the heat conducting member 16 may be a thermal superconductor, such as a heat pipe or a thermally conductive graphite rod. Optionally, the shape of the heat conducting member 16 matches the shape of the hole 15, and the heat conducting member 16 located in the hole 15 is attached to a hole wall of the hole 15, thereby improving the heat conduction efficiency.

When the cylindrical battery cell 20 generates heat, the heat of the cylindrical battery cell 20 can be transferred to the heat conducting member 16 through the insulating and limiting strip 13, and the heat is then transferred from the middle of the heat conducting member 16 to two ends of the heat conducting member 16 for dissipation, thereby effectively dissipating heat from the cylindrical battery cell 20.

According to some embodiments of this application, optionally, the battery 100 includes a structural reinforcing member 17. The structural reinforcing member 17 is at least partially located in the hole 15. A rigidity of the structural reinforcing member 17 is greater than a rigidity of the insulating and limiting strip 13.

Optionally, in FIG. 14, the hole 15 runs through the insulating and limiting strip 13 along the second direction. The structural reinforcing member 17 may be at least partially located in the hole 15. Specifically, two ends of the structural reinforcing member 17 along the second direction can extend out of the hole 15, be flush with end openings of the hole 15, or be located in the hole 15. In FIG. 14, the two ends of the structural reinforcing member 17 along the second direction are flush with the end openings of the hole 15.

Optionally, the shape of the structural reinforcing member 17 matches the shape of the hole 15, and the structural reinforcing member 17 located in the hole 15 is attached to the hole wall of the hole 15, thereby further improving the rigidity of the insulating and limiting strip 13.

In an embodiment, the insulating and limiting strip 13 is made of plastic. The structural reinforcing member 17 is made of metal. The insulating and limiting strip 13 made of plastic has low rigidity and is easily crushed by the cylindrical battery cell 20. The structural reinforcing member 17 made of metal has high rigidity, which can increase the rigidity of the insulating and limiting strip 13 and extend the service life of the insulating and limiting strip 13.

According to some embodiments of this application, this application further provides a battery cell assembly method, including:
providing a frame 102, where an accommodating cavity 101 is provided in the frame 102, and a side of the frame 102 is provided with an opening 103 in communication with the accommodating cavity 101; and
loading a plurality of cylindrical battery cells 20 into the accommodating cavity 101 through the opening 103, and loading at least one insulating and limiting strip 13 into the accommodating cavity 101 through the opening 103, so that the plurality of cylindrical battery cells 20 are arranged at intervals, and two adjacent cylindrical battery cells 20 are separated and limited by at least one insulating and limiting strip 13.

In FIGs. 5 to 8, an upper side of the frame 102 along a gravity direction is provided with the opening 103 in communication with the accommodating cavity 101. The gravity direction is an A2 direction. The opening 103 faces the A1 direction, that is, the opening 103 is arranged upward.

Optionally, when a plurality of cylindrical battery cells 20 are assembled, the plurality of cylindrical battery cells 20 can be loaded into the accommodating cavity 101 through the opening 103 in a posture where a length direction of the cylindrical battery cells 20 is not parallel to the gravity direction. Optionally, when the insulating and limiting strip 13 is assembled, the insulating and limiting strip 13 can be loaded into the accommodating cavity 101 through the opening 103 in a posture where a length direction of the insulating and limiting strip 13 is not parallel to the gravity direction. Being not parallel may include being inclined and being perpendicular. Optionally, during installation, the cylindrical battery cells 20 are loaded into the accommodating cavity 101 through the opening 103 in a posture where the length direction of the cylindrical battery cells 20 is perpendicular to the gravity direction, and the insulating and limiting strip 13 is loaded into the accommodating cavity 101 through the opening 103 in a posture where the length direction of the insulating and limiting strip 13 is perpendicular to the gravity direction, so that the plurality of cylindrical battery cells 20 can be arranged at intervals along the gravity direction.

Optionally, a manipulator, a robot, or other devices can be used to load the cylindrical battery cells 20 and the insulating and limiting strips 13 into the accommodating cavity 101. This is not specifically limited in this application. Optionally, during assembly, the frame 102 can be fixed by a fixing member.

According to some embodiments of this application, optionally, the assembly method includes: connecting a baffle 14 to an upper side of the frame 102 and covering the opening 103, so that the baffle 14 limits a cylindrical battery cell 20 in contact with the baffle 14.

Through the baffle 14, a cylindrical battery cell 20 closest to the opening 103 can be limited and fixed, thereby allowing all cylindrical battery cells 20 in the accommodating cavity to be more effectively limited.

Specifically, the assembly process of the cylindrical battery cells 20 includes the following steps: a first step of arranging the opening 103 of the frame 102 upward; a second step of placing the first row of cylindrical battery cells 20 into a first cylindrical surface accommodating groove 104 on a bottom surface of the accommodating cavity 101; a third step of placing the first row of insulating and limiting strips 13 between the first row of cylindrical battery cells 20; a fourth step of placing the second row of cylindrical battery cells 20 on the first row of insulating and limiting strips 13; and a fifth step of placing the second row of insulating and limiting strips 13 between the second row of cylindrical battery cells 20, and so on. No insulating and limiting strip 13 needs to be placed above the last row of cylindrical battery cells 20. The last step is placing the baffle 14 and performing mechanical pre-fixing or mechanical fixing.

In the assembly process, low position accuracy requirements are imposed during placement of the cylindrical battery cells 20 and the insulating and limiting strips 13. After placement, the cylindrical battery cells 20 and the insulating and limiting strips 13 are automatically corrected to the most stable positions under the action of gravity, exhibiting self-adaptability, and allowing the arrangement to have self-stability. The positions of the cylindrical battery cells 20 and the insulating and limiting strips 13 are reliable. Moreover, as the number of cylindrical battery cells 20 and insulating and limiting strips 13 increases, the cooperation between the cylindrical battery cells 20 and the insulating and limiting strips 13 automatically becomes tighter, making the installation simple and efficient.

According to some embodiments of this application, this application further provides an electric apparatus, including the battery 100 according to any one of the above solutions, where the battery 100 is configured to provide electrical energy for the electric apparatus.

The electric apparatus may be a device or system using any one of the foregoing batteries 100.

Finally, it should be noted that the above embodiments are only used to illustrate the technical solutions of this application, and are not intended to limit them. Although this application has been described in detail with reference to the foregoing embodiments, those of ordinary skill in the art should understand that they can still modify the technical solutions recorded in the foregoing embodiments or equivalently replace some or all of the technical features. These modifications or replacements do not make the essence of the corresponding technical solutions depart from the scope of the technical solutions of the embodiments of this application, and should all fall within the scope of the claims and specification of this application. In particular, as long as there is no structural conflict, the various technical features mentioned in the various embodiments can be combined in any manner. This application is not limited to the specific embodiments disclosed herein, but includes all technical solutions falling within the scope of the claims.

## Claims

1. A battery, **characterized by** comprising:
a frame, wherein an accommodating cavity is provided in the frame, and a side of the frame along a first direction is provided with an opening in communication with the accommodating cavity;
a plurality of cylindrical battery cells, wherein the plurality of cylindrical battery cells are accommodated in the accommodating cavity; and
at least one insulating and limiting strip, wherein the insulating and limiting strip is accommodated in the accommodating cavity, and two adjacent ones of the cylindrical battery cells are separated and limited by at least one of the insulating and limiting strips.

2. The battery according to claim 1, **characterized in that** a length direction of the cylindrical battery cell is along a second direction, a length direction of the insulating and limiting strip is along the second direction, and the second direction and the first direction are perpendicular to each other.

3. The battery according to claim 1 or 2, **characterized in that** the battery comprises a plurality of rows of cylindrical battery cells arranged at intervals along the first direction; a length direction of the cylindrical battery cell is along a second direction; two adjacent rows of cylindrical battery cells along the first direction are separated and limited by at least one of the insulating and limiting strips, and/or two adjacent cylindrical battery cells in a same row of cylindrical battery cells are separated and limited by at least one of the insulating and limiting strips; and the second direction and the first direction are perpendicular to each other.

4. The battery according to claim 3, **characterized in that** the at least one insulating and limiting strip comprises a plurality of insulating and limiting strips; the plurality of insulating and limiting strips are arranged in a row along a third direction; the two adjacent rows of cylindrical battery cells along the first direction are limited by one row of insulating and limiting strips; and the third direction, the first direction, and the second direction are perpendicular to each other.

5. The battery according to claim 3 or 4, **characterized in that** a bottom surface of the accommodating cavity is provided with a plurality of first cylindrical surface accommodating grooves; the plurality of first cylindrical surface accommodating grooves are arranged at intervals along a third direction; a length direction of the first cylindrical surface accommodating groove is along the second direction; a plurality of cylindrical battery cells in a row of cylindrical battery cells closest to the bottom surface of the accommodating cavity are partially accommodated in the plurality of first cylindrical surface accommodating grooves in one-to-one correspondence; and the third direction, the first direction, and the second direction are perpendicular to each other.

6. The battery according to any one of claims 3 to 5, **characterized in that** the at least one insulating and limiting strip comprises a first insulating and limiting strip, and the first insulating and limiting strip is provided with a second cylindrical surface accommodating groove, a third cylindrical surface accommodating groove, and a fourth cylindrical surface accommodating groove; and
in the two adjacent rows of cylindrical battery cells along the first direction, two adjacent cylindrical battery cells in one row of cylindrical battery cells are respectively partially accommodated along a third direction in the second cylindrical surface accommodating groove and the third cylindrical surface accommodating groove, and one cylindrical battery cell in the other row of cylindrical battery cells is partially accommodated in the fourth cylindrical surface accommodating groove; and the third direction, the first direction, and the second direction are perpendicular to each other.

7. The battery according to any one of claims 3 to 6, **characterized in that** the at least one insulating and limiting strip comprises a second insulating and limiting strip, and the second insulating and limiting strip is provided with a fifth cylindrical surface accommodating groove, a sixth cylindrical surface accommodating groove, a seventh cylindrical surface accommodating groove, and an eighth cylindrical surface accommodating groove; and
in the two adjacent rows of cylindrical battery cells along the first direction, two adjacent cylindrical battery cells in one row of cylindrical battery cells are respectively partially accommodated along a third direction in the fifth cylindrical surface accommodating groove and the sixth cylindrical surface accommodating groove, and two adjacent cylindrical battery cells in the other row of cylindrical battery cells are respectively partially accommodated along the third direction in the seventh cylindrical surface accommodating groove and the eighth cylindrical surface accommodating groove; and the third direction, the first direction, and the second direction are perpendicular to each other.

8. The battery according to claim 7, **characterized in that** the second insulating and limiting strip is provided with a ninth cylindrical surface accommodating groove and a tenth cylindrical surface accommodating groove; and
in the two adjacent rows of cylindrical battery cells along the first direction, three adjacent cylindrical battery cells in one row of cylindrical battery cells are partially accommodated along the third direction in the fifth cylindrical surface accommodating groove, the sixth cylindrical surface accommodating groove, and the tenth cylindrical surface accommodating groove in one-to-one correspondence, and three adjacent cylindrical battery cells in the other row of cylindrical battery cells are partially accommodated along the third direction in the ninth cylindrical surface accommodating groove, the seventh cylindrical surface accommodating groove, and the eighth cylindrical surface accommodating groove in one-to-one correspondence.

9. The battery according to claim 8, **characterized in that** the fifth cylindrical surface accommodating groove, the sixth cylindrical surface accommodating groove, and the tenth cylindrical surface accommodating groove are sequentially arranged along the third direction, and sector angles of the sixth cylindrical surface accommodating groove, the fifth cylindrical surface accommodating groove, and the tenth cylindrical surface accommodating groove sequentially decrease; and
the ninth cylindrical surface accommodating groove, the seventh cylindrical surface accommodating groove, and the eighth cylindrical surface accommodating groove are sequentially arranged along the third direction, and sector angles of the seventh cylindrical surface accommodating groove, the eighth cylindrical surface accommodating groove, and the ninth cylindrical surface accommodating groove sequentially decrease.

10. The battery according to any one of claims 1 to 9, **characterized in that** the battery comprises a baffle, the baffle is fixedly connected to a side surface of the frame provided with the opening and covers the opening, and the baffle limits a cylindrical battery cell in contact with the baffle.

11. The battery according to claim 10, **characterized in that** a side surface of the baffle facing the accommodating cavity is provided with a plurality of eleventh cylindrical surface accommodating grooves; the plurality of eleventh cylindrical surface accommodating grooves are arranged at intervals along a third direction; a plurality of cylindrical battery cells in one row of cylindrical battery cells in contact with the baffle are partially accommodated in the plurality of eleventh cylindrical surface accommodating grooves in one-to-one correspondence; and the third direction and the first direction are perpendicular to each other.

12. The battery according to any one of claims 5 to 11, **characterized in that** a sector angle of the cylindrical surface accommodating groove is less than or equal to 180 degrees.

13. The battery according to claim 12, **characterized in that** the sector angle of the cylindrical surface accommodating groove is greater than 45 degrees.

14. The battery according to any one of claims 1 to 13, **characterized in that** at least one side wall of the accommodating cavity along a third direction is provided with a plurality of first cylindrical surface limiting portions and a plurality of second cylindrical surface limiting portions, wherein the first cylindrical surface limiting portion and the second cylindrical surface limiting portion are alternately arranged along the first direction on a same side wall, and the third direction and the first direction are perpendicular to each other; and
the first cylindrical surface limiting portion limits an insulating and limiting strip in contact with the first cylindrical surface limiting portion along the third direction, and the second cylindrical surface limiting portion limits a cylindrical battery cell in contact with the second cylindrical surface limiting portion along the third direction.

15. The battery according to claim 14, **characterized in that** a distance between the lowest end of the first cylindrical surface limiting portion and a center of the cylindrical battery cell located below is L, wherein L > R + d, R is a radius of the cylindrical battery cell, and d is a safety margin; along the first direction, a transition boundary below the first cylindrical surface limiting portion is located outside a first virtual circle; and the first virtual circle is defined as a virtual circle, wherein the virtual circle is tangent to a tangent line to a vertex of a cylindrical surface of the second cylindrical surface limiting portion located below the first cylindrical surface limiting portion along the first direction, passes through the lowest end of the first cylindrical surface limiting portion, and has a radius equal to the radius of the cylindrical battery cell.

16. The battery according to claim 15, **characterized in that** d > R × 1/3.

17. The battery according to any one of claims 1 to 16, **characterized in that** the insulating and limiting strip comprises a hole, and the hole runs through at least one side surface of the insulating and limiting strip along a length direction.

18. The battery according to claim 17, **characterized in that** the battery comprises a heat conducting member, and the heat conducting member is at least partially located in the hole.

19. The battery according to claim 17, **characterized in that** the battery comprises a structural reinforcing member, the structural reinforcing member is at least partially located in the hole, and a rigidity of the structural reinforcing member is greater than a rigidity of the insulating and limiting strip.

20. A battery cell assembly method, **characterized by** comprising:
providing a frame, wherein an accommodating cavity is provided in the frame, and a side of the frame is provided with an opening in communication with the accommodating cavity; and
loading a plurality of cylindrical battery cells into the accommodating cavity through the opening, and loading at least one insulating and limiting strip into the accommodating cavity through the opening, so that the plurality of cylindrical battery cells are arranged at intervals, and two adjacent cylindrical battery cells are separated and limited by at least one insulating and limiting strip.

21. The assembly method according to claim 20, **characterized in that** the assembly method comprises:
connecting a baffle to an upper side of the frame and covering the opening, so that the baffle limits a cylindrical battery cell in contact with the baffle.

22. An electric apparatus, **characterized by** comprising the battery according to any one of claims 1 to 19, wherein the battery is configured to provide electrical energy.
